# EUROPEAN PATENT APPLICATION

(11) **EP 4 561 129 A1**
(43) Date of publication of application: **28.05.2025**
(21) Application number: 23852830.1
(22) Date of filing: 31.07.2023
(51) Int. Cl.: H04W 8/24, H04W 12/04, H04L 67/303, H04L 41/0806, H04W 8/20, H04L 9/40

(54) **METHOD AND DEVICE FOR PROVISIONING PROFILE IN WIRELESS COMMUNICATION SYSTEM**

(30) Priority: 12.08.2022 KR 20220101535; 25.11.2022 KR 20220160219; 24.03.2023 KR 20230038787; 08.06.2023 KR 20230073672; 18.07.2023 KR 20230093155
(71) Applicant: Samsung Electronics Co., Ltd., Suwon-si, Gyeonggi-do 16677 (KR)
(72) Inventor: KANG, Sujung, Suwon-si Gyeonggi-do 16677 (KR); YOON, Kangjin, Suwon-si Gyeonggi-do 16677 (KR); LEE, Duckey, Suwon-si Gyeonggi-do 16677 (KR)
(74) Representative: Gulde & Partner
(86) International application number: PCT/KR2023/011123
(87) International publication number: WO 2024/034949

(57) **Abstract**

The present disclosure relates to a 5G or 6G communication system for supporting higher data transmission rates. According to various embodiments of the present disclosure, a method performed by a terminal including an embed universal integrated circuit card (eUICC) in a wireless communication system may include an operation of receiving a first message including a bound profile package (BPP) for installation of a profile and encryption key information associated with the BPP from a factory IT server, an operation of entering a profile configuration mode on the basis of the first message, an operation of transmitting, to the eUICC, a second message including the BPP, and an operation of receiving a third message including a profile installation result from the eUICC.

## Description

### [Technical Field]

The disclosure relates to a method and a device for provisioning a profile in a wireless communication system.

More specifically, the disclosure relates to a method and a device for provisioning multiple profiles for a UE in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multibeam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Based on the above discussion, the disclosure may provide a method and a device for provisioning a large amount of profiles for a UE in a wireless communication system.

### [Solution to Problem]

According to various embodiments of the disclosure, a method performed by a terminal having an embed universal integrated circuit card (eUICC) in a wireless communication system may include: receiving a first message including a bound profile package (BPP) for profile installation and encryption key information related to the BPP from a factory IT server; entering a profile configuration mode, based on the first message; transmitting a second message including the BPP to the eUICC; and receiving a third message including a profile installation result from the eUICC.

### [Advantageous Effects of Invention]

The disclosure may provide a method and a device capable of effectively installing profiles for a UE in a wireless communication system.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1 illustrates the relationship between components for provisioning a profile according to an embodiment of the disclosure.
FIG. 2 illustrates operations of provisioning a large amount of profiles according to an embodiment of the disclosure.
FIG. 3 illustrates operations of preparing profiles in order to provision a large amount of profiles according to an embodiment of the disclosure.
FIG. 4 illustrates operations of installing a profile from the factory IT to the eUICC in FIG. 2 according to an embodiment of the disclosure.
FIG. 5 illustrates operations of installing a profile from the factory IT to the eUICC in FIG. 2 according to an embodiment of the disclosure.
FIG. 6 illustrates operations of installing a profile from the factory IT to the eUICC in FIG. 2 according to an embodiment of the disclosure.
FIG. 7 is a block diagram illustrating the structure of a profile server, a factory IT, and a UE in a wireless communication system according to an embodiment of the disclosure.
FIG. 8 is a block diagram illustrating the structure of a factory IT in a wireless communication system according to an embodiment of the disclosure.

### [Mode for Carrying out the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, subroutines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

Hereinafter, for convenience of description, the disclosure will use terms and names defined in RSP specifications (SGP.XX series) which are standards defined by GSM association (GSMA) groups among currently extant eSIM standards. However, the disclosure is not limited to above-mentioned terms and names, and may be equally applied to eSIMs that follow other specifications.

A universal integrated circuit card (UICC) is a smart card inserted and used in a UE (for example, mobile communication terminal), and is also referred to as a UICC card. The UICC may include an access control module for accessing a mobile communication operator's network. Examples of the access control module include a universal subscriber identity module (USIM), a subscriber identity module (SIM), an Internet protocol (IP) multimedia service identity module (ISIM), and the like.

A UICC including a USIM is also commonly referred to as a USIM card. Likewise, UICC including a SIM module also commonly referred to as a SIM card. It is to be noted that a SIM card, as used in the following description, may encompass a UICC card, a USIM card, a UICC including an ISIM, and the like. Obviously, a SIM card may have the same technical application as a USIM card or an ISIM card or a normal UICC card.

A SIM card stores a mobile communication subscriber's personal information and, when accessing a mobile communication network, authenticates the subscriber and generates a traffic encryption key, thereby enabling safe mobile communication use.

In general, a SIM card is manufactured, at the request of a specific mobile communication operator, as a dedicated card for the mobile communication operator, and authentication information for accessing the operator's network, for example, a universal subscriber identity module (USIM) application, international mobile subscriber identity (IMSI), K value, OPc value, and the like are preloaded into the card, which is then shipped. Therefore, the manufactured SIM card is delivered to the mobile communication operator and then provided to the subscriber. Thereafter, a technology such as over the air (OTA) may be used, if necessary, to manage (for example, install, modify, and delete) applications in the UICC.

The subscriber may insert the UICC card into his/her mobile communication terminal, thereby using the mobile communication operator's network and application services. When replacing the mobile communication terminal, the subscriber may remove the UICC card from the existing mobile communication terminal and then insert the same into a new mobile communication terminal such that the same authentication information, mobile communication telephone numbers, personal telephone directories, and the like stored in the UICC card can be used in the new mobile communication terminal.

However, the SIM card makes it inconvenient for the mobile communication terminal user to receive services provided by other mobile communication operators. The mobile communication terminal user has to physically acquire another SIM card in an inconvenient manner in order to receive services provided by the corresponding mobile communication operator. For example, when traveling to another nation, the user has to purchase a local SIM card in an inconvenient manner in order to use local mobile communication services. A roaming service may alleviate the inconvenience to some extent, but has a problem in that, in addition to the high cost, the user cannot use service in the absence of a contract between communication operators.

Meanwhile, such inconvenience may be alleviated to some extent by remotely downloading and installing a SIM module in the UICC card. For example, the SIM module of the mobile communication service to be used may be downloaded to the UICC card at a timepoint desired by the user. It is also possible to download and install multiple SIM modules in the UICC card, and only one of the SIM modules may be selected and used. Such a UICC card may or may not be fixed to the terminal. A UICC that is used while being fixed to a UE is commonly referred to as an eUICC, and a UICC card in which SIM modules may be remotely downloaded and selected from may be referred to as an eUICC as a whole. That is, among UICC cards in which SIM modules may be remotely downloaded and selected from, a UICC card that is fixed to a UE and a UICC card that is not fixed to a UE may be referred to as eUICCs as a whole. In addition, downloaded SIM module information is referred to as the term "profile" as a whole. Examples of the profile include a provisioning profile, the usage of which is limited to connectivity for initial configurations, an operational profile, the usage of which is not limited as above, and a test profile, the usage of which is limited to testing, and may be further subdivided according to the usage.

In order to install a profile in an eUICC, it is commonly assumed that, after the UE is shipped, the UE user downloads the profile through a real-time network connection to the profile download server. Remote profile provisioning standard specifications, which are eSIM standardization standards currently defined in GSMA, for example, SGP.21/22 which is a consumer UE-oriented remote SIM provisioning standard, SGP.31/32 which is an IoT UE-oriented remote SIM provisioning standard, and SGP.01/02 which is an M2M UE-oriented remote SIM provisioning standard, define a process in which the UE is connected to the profile download server in real time through a network such that the UE and the profile server exchanges messages multiple times, and a process of downloading a profile after undergoing common mutual authentication in the former process. However, the UE cannot always assume a situation in the network is connected at the timepoint of downloading a profile from the profile download server. Therefore, in order to solve this, SGP.21/22 has introduced a provisioning profile, the usage of which is limited such that the same provides only connectivity for initial configurations for the UE. Therefore, the UE manufacturer may ship an UICC equipped with the provisioning profile. In addition, it may also be possible for the manufacturer to ship an eUICC pre-equipped with the communication operator's operational profile having no usage limit as described above, based on a contract with the service provider. In case that an eUICC is pre-equipped with a profile, the profile is commonly preloaded in the eUICC at the eUICC manufacturer factory and then delivered to the UE manufacturer. There is a problem in that, in the case of UEs including the eUICC, the UE manufacturer needs a stock keeping unit (SKU) for distinguishing hardware, and the same thus fails to be activated. Meanwhile, GSM association (GSMA) has recently approved a new work item for provisioning a profile in a UE at the factory, and discussion regarding standardization of devices and methods for provisioning a profile in a UE at the factory is expected to occur according to SGP.41 (technology requirement specifications) and SGP.42 (technology specifications (expected)).

In the disclosure, the function for provisioning a profile at the factory may be referred to as an in-factory profile provisioning (IFPP) function, and entering a state in which the corresponding function is supported may be described as entering an IFPP mode or being in an IFPP state. In addition, "f" may be added to the end of each entity's name to indicate a state in which the same operates in the corresponding mode. For example, as a specific entity, a UE, an LPA, an eUICC, a profile server, a factory IT, a service provider (SP) server, or an eUICC manufacturer (EUM) server may be an entity that further supports the EFPP mode, or an entity that supports the corresponding function only. For example, an SM-DP+, which is one of profile servers, supports the consumer UE-oriented remote SIM provisioning function defined in SGP.21/22, but may further support a part of the IFPP function defined in SGP.41/42. Alternatively, an SM-DP+, which is a profile server, may support only the IFPP function. A profile server operating in the IFPP state may also be described as a profile server f in the disclosure, for example.

In the disclosure, a universal integrated circuit card (UICC) is a smart card used while being inserted into a mobile communication terminal, and may refer to a chip configured to store the mobile communication subscriber's personal information such as network access authentication information, telephone directories, and SMSs, and configured to authenticate the subscriber and generate a traffic encryption key when accessing mobile communication system (for example, GSM, WCDMA, LTE, or 5G) thereby enabling safe mobile communication use. The UICC is equipped with a communication application such as a subscriber identification module (SIM), a universal SIM (USIM), or a multimedia SIM (MSIM), according to the type of the network accessed by the subscriber, and may provide an upper-level security function for loading various applications such as an electronic wallet, ticketing, and an electronic passport.

In the disclosure, an embedded UICC (eUICC) is not limited to a security module embedded in a UE, and includes an attachable/detachable security module that can be inserted into and detached from a UE. The eUICC is a programmable SIM card, and over the air (OTA) technology may be generally used to download and install a profile from the server that stores the same. The eUICC may be referred to as a UICC capable of downloading and installing a profile.

In the disclosure, the method in which a profile is downloaded and installed in an eUICC by using the OTA technology may also be applied to an attachable/detachable UICC that can be inserted into and detached from a UE, as described above. For example, an embodiment of the disclosure may be applied to an attachable/detachable UICC in which a profile can be downloaded and installed by using the OTA technology. In the disclosure, an eUICC unique identification number (eUICC ID) may be referred to as an EID. In the disclosure, the term "UICC" may be used interchangeably with "SIM", and the term "eUICC" may be used interchangeably with "eSIM".

In the disclosure, a profile may refer to an application, a file system, an authentication key value, and the like, which are stored in a UICC, and which are packaged as software. In addition, a profile may be referred to as access information. In addition, in the disclosure, a USIM profile may have the same meaning as a profile, or may refer to information included in a USIM application in the profile, which is packaged as software. In the disclosure, the term "profile package" or "bound profile package (BPP)" may be used interchangeably with "profile" or may refer to a specific profile's data object, and may be referred to as a profile TLV or profile package TLV. A profile identifier may be referred to as an integrated circuit card identifier (ICCID) that indicates the profile's unique identification number. In case that a profile package is encrypted by using an encryption parameter, the same may be referred to as a protected profile package (PPP) or protected profile package TLV (PPP TLV). In case that a profile package is encrypted by using an encryption parameter that can be decrypted only by a specific eUICC, the same may be referred to as a bound profile package (BPP) or bound profile package TLV (BPP TLV). A profile package TLV may be a data set that expresses information that constitutes the profile in a tag-length-value (TLV) format.

In the disclosure, a profile server may be a server which may provide a function of generating a profile, encrypting the generated profile, generating a profile remote management instruction, or encrypting the generated profile remote management instruction, which may provide an IFPP mode, or which may include a function of supporting the UE's multi-profile activation, and may be expressed by subscription manager data preparation (SM-DP), subscription manager data preparation plus (SM-DP+), or subscription manager secure routing (SM-SR).

The term "UE" or "device" used in the disclosure may be referred to as a mobile station (MS), user equipment (UE), mobile equipment (ME), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various embodiments of a UE may include not only a cellular phone, a smartphone having a wireless communication function, a personal digital assistant (PDA) having a wireless communication function, a wireless modem, a portable computer having a wireless communication function, an imaging device (for example, digital camera) having a wireless communication function, a gaming device having a wireless communication function, a home appliance which has a wireless communication function, and which is configured to store and play music, and an Internet home appliance capable of wireless Internet accessing and browsing, but also portable units or terminals which integrate combinations of such functions. In addition, the UE may include a machine-to-machine (M2M) UE, a machine type communication (MTC) UE/device, or an IoT UE/device, depending on supported performance characteristics. In the disclosure, a UE may be referred to as an electronic device or simply a device. A UE 120 that provides a function for installing a profile in an eUICC may be referred to as an eSIM UE.

According to an embodiment of the disclosure, an eUICC manufacturer (EUM) refers to a manufacturer who produces an eUICC, personalizes the eUICC, and provides the same. The EUM may deliver information on/off line through a channel between an EUM server or a separate component. In addition, the EUM may refer to a role played by the EUM or EUM server.

In the disclosure, a UE or device may include software or an application installed in the UE or device so as to control a UICC or eUICC. The software or application may be, for example, a local profile assistant (LPA), a SIM manager, or an IoT profile assistant (IPA). Corresponding software or functions may be integrated and provided. For example, the LPA and IPA may be provided as a single integrated app. In the disclosure, software or an application installed in the UE or device so as to control a UICC or eUICC may be referred to as an LPA as a whole.

In the disclosure, an application protocol data unit (APDU) may be a message or message type exchanged between the controller in the UE or device and the eUICC. The APDU has a command and a response configured as a pair, and the APDU command and APDU response are defined in ETSI 102.221 with reference to ISO 7816. As defined in ETSI 102.221, the APDU command has the following structure: the APDU's header includes a class of instruction (CLA), an instruction (INS), instruction parameter 1 (P1), and instruction parameter 2 (P2), and the APDU's body includes the number of bytes in the command data field (Lc), data, and the number of bytes expected in response of the command (Le). The APDU response has the structure of an optional data field, status byte 1, and status byte 2. ETSI 102.221 specifications will be referenced for detailed descriptions thereof. An LPA or application message may be transmitted from the UE to the eUICC in the APDU type, and transmitted information may be included in the APDU's data.

In the disclosure, authentication and key agreement (AKA) may refer to an authentication algorithm for accessing 3GPP and 3GPP2 networks. K refers to an encryption key value stored in the eUICC used for the AKA authentication algorithm, and OPc in the disclosure refers to a parameter value that may be stored in the eUICC used for the AKA authentication algorithm.

In the disclosure, a network access application (NAA) may be an application program (for example, USIM or ISIM) stored in a UICC so as to access a network. The NAA may be a network access module.

In the disclosure, the terms "end user", "user", "subscriber", and "service subscriber" may be used interchangeably to denote the corresponding UE's user.

In the disclosure, a factory IT is a device configured to provision specific data or configuration for a UE in manufacturing processes, and may refer to a module including a function of downloading a profile to the UE, and may further include a function of acquiring and storing profiles from a profile server. The terms "factory IT" may be used interchangeably with "factory IT equipment", "factory IT server", "factory provisioning equipment", and "factory server". Even if expressed as a server in the following, the factory IT in the disclosure may function as one or more modules, for example, a server configured to store data and a UE configured to inject configurations or data in an eSIM UE.

In the disclosure, the term "OEM" may be used interchangeably with "UE manufacturer" and "manufacturer".

In the disclosure, the term "service provider (SP)" may be used interchangeably with "communication service operator", "MNO", "mobile network operator", "business operator", "communication provider", and "SP server". Depending on the embodiment, the service provider may refer to the service provider's server or roles played by the service provider.

In the disclosure, a server vendor refers to a vendor who operates a profile server, and may refer to roles played by the profile server vendor.

In the disclosure, the term "encryption key" is used to encompass encryption and decryption keys. For example, an encryption key may include a secret key (used interchangeably with private key) used to encrypt data, or a public key for decrypting the same, and the public key may be shared as a credential.

In the disclosure, a one-time encryption key, a one-time public key or private key may refer to an encryption key required for key agreement, and "one-time" as used herein may mean that the key is used for one time of profile installation. As will be described later in the disclosure, the corresponding key can be discarded if the profile is successfully installed, or stored in the eUICC before the installation finally succeeds, and may be interpreted with reference to GSMA SGP.22 definition.

The disclosure may provide a method and a device wherein, in the case of a UE including an eUICC, a profile is inserted therein without separating the hardware SKU such that an eSIM UE can be commercially available while maintaining the same hardware SKU.

In addition, the disclosure may provide a method and a device for quickly downloading and installing profiles in a large amount of UEs by overcoming the problems in that characteristics of factory environments require fast profile injection into a large amount of UEs, and it is thus difficult to perform a process of exchanging messages reciprocally multiple times, including a process of real-time network connection between a profile server and individual UEs and mutual authentication. This may require an operation in which the profile server and eSIM UE distinguish between profile downloading in a normal situation and profile downloading in a situation that requires massive injection of profiles into UEs at factories. In addition, there may be a need for a method in which factory IT equipment provisions profiles for UEs without considering the real-time connection between the profile server and UEs. Particularly, there may be a need for a method for delivering, verifying, and installing a profile encryption key in consideration of "non-real-time characteristics" between the profile server (for example, SM-DP+) and the eUICC. In addition, there is a need for a scheme that considers the environment in which profiles are massively provisioned at factories. Particularly, there may be a need for a method and a device for providing information of a large amount of profiles to be transmitted between entities in the process of ordering and preparing profiles to this end.

According to various embodiments of the disclosure, a UE manufacturer may preinstall a large amount of profiles in eSIM UEs without real-time connection to the profile server and then ship the same, and may efficiently manage the stock by installing profiles without H/W SKU separation.

In addition, according to various embodiments of the disclosure, a user may buy a UE having a preinstalled profile and instantly access networks, without the inconvenience of having to discover Wi-Fi or mobile communication networks to download a profile, thereby improving the user's convenience.

In addition, according to various embodiments of the disclosure, a communication operator may provide a user with a UE having a preinstalled provisioning profile for downloading the operator's profile or a preinstalled operational profile that enables instant use of the operator's network services, thereby improving the user's convenience in connection with eSIM use.

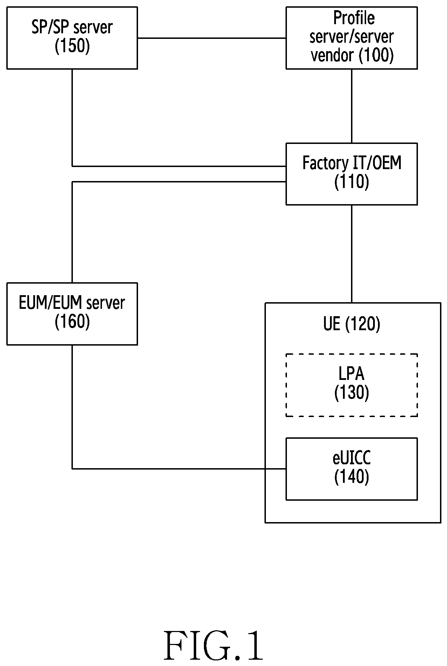

FIG. 1 illustrates the relationship between components for provisioning a profile according to an embodiment of the disclosure.

Referring to FIG. 1, the profile server/server vendor (hereinafter, may be referred to as a profile server or server vendor) 100 may correspond to at least one of a server including a function of generating a profile, storing the generated profile, encrypting the generated profile, generating a remote profile management (RPM) instruction, or encrypting the generated RPM instruction, a server supporting a function or transmitting the generated profile to an eSIM UE or another profile storage server, and a server supporting a function of generating a profile for IFPP, storing the profile generated for IFPP, or encrypting the profile generated for IFPP. The remote profile management (RPM) may refer to a series of procedures in which profile installation, activation, deactivation, deletion, and other functions are performed by instructions transmitted from the profile server 100 to the UE 120. The RPM may be requested by a communication operator, a service provider, or the UE's owner such that the profile server 100 generates instructions. The profile server/server vendor 100 may receive a profile ordering request from the service provider (SP)/SP server (hereinafter, may be referred to as an SP or SP server) 150 and may determine whether the request is for the purpose of generating a profile for IFPP, or may combine profile ordering information received from the factory IT server/OEM (hereinafter, may be referred to as a factory IT, factory server, or OEM) 110 or the SP/SP server 150 with EID information used to place the order, may map the profile and EID, and may prepare the same in the profile server 100. The SP/SP server 150 may receive the profile ordering request from the factory IT server/OEM 110, may determine whether the order requests profiles for IFPP to be provided, and may place an order from the SP/SP server 150 to the profile server/server vendor 100 such that the profile server 100 provides one or more bound profile packages (BPPs) to the factory IT 110.

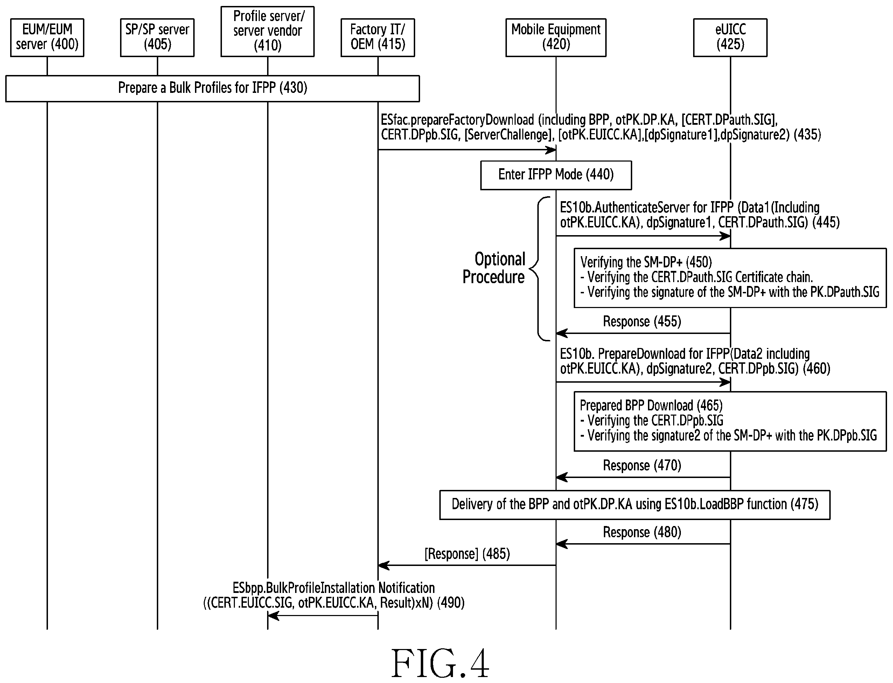

The UE 120 may include an eUICC 140 and a communication modem (not illustrated). The communication modem may be equipped with one or more baseband processors for radio communication (hereinafter, referred to as basebands). The UE 120 may provide a function of receiving BPP(s) generated for IFPP from the factory IT 110 and installing the BPP(s) in the eUICC 140. The UE 120 may deliver a BPP to the eUICC 140. The UE 120 may deliver a BPP to the eUICC 140 via an LPA 130 that operates as an LPAf or may deliver a BPP to the eUICC 140 without going through the LPA 130. As an example of methods for installing a BPP delivered to the eUICC 140 via an LPA 130 that operates as an LPAf and transmitting a message regarding encryption key information, one or more messages starting with ES10x and including the information may be transmitted. An embodiment regarding the same will be described later with reference to FIG. 4 to FIG. 6.

Meanwhile, although one profile server 100 has been described above, there may be multiple profile servers 100, and the factory IT 110 may accordingly receive BPPs from the multiple profile servers 100 and store the same.

As described above, the LPA 130 may support an IFPP function with eUICC control software or application. The LPA 130 may be implemented as a logical function of the UE 120 or eUICC 140. The LPA 130 that operates as an LPAf may be configured to receive a profile and additional authentication information for authenticating the profile server 100 from the factory IT 110, provide the same to the eUICC 140, acquire a profile installation result from the eUICC 140, and deliver the same to the factory IT 110.

The eUICC 140 may determine to enter an IFPP mode by identifying a request for profile installation at a factory through one or more messages of ES10x received from the LPA 130 that operates as an LPAf, or a profile installation message received through software or application regarding a factory configuration of the factory IT 110 or UE. In case that the eUICC 140 does not support the IFPP function, the eUICC 140 may return an error and end the IFPP processing.

The eUICC 140 may acquire a profile and information for authenticating the profile server 100 from the UE 120, may decrypt the profile with corresponding information, thereby processing installation, and may return the installation result to the component that has transmitted the request, that is, the UE's specific application or the LPA 130 that operates as an LPAf of the UE. In addition, the eUICC 140 may verify the profile server 100 that as encrypted the profile by verifying the signature of the component that has signed a received message, or may authenticate the profile server 100 that has transmitted the message. The eUICC 140 may include an embedded UICC controlling authority security domain (ECASD) as a space for storing credentials requested by security domains of the eUICC 140, for example, a certificate issuer's root public key for verifying an SM-DP+ certificate in the profile server 100, the eUICC manufacturer's keyset, and the like, an eSIM operating platform, and the like. In addition, some functions of the LPA may be implemented therein.

The factory IT server 110 may be configured to provision a profile in a UE at a factory. The factory IT server 110 may acquire predetermined information regarding corresponding eUICCs 140, including a one-time encryption key, from the EUM/EUM server (hereinafter, may be referred to as EUM or EUM server) 160, or may deliver all or part of the acquired information regarding eUICCs 140 to the profile server/server vendor 100, or may deliver information for mapping regarding the profile and EID to be ordered to the SP/SP server 150, or may store the received encryption key information and BPP.

The factory IT server/OEM 110 may perform at least one of the following: requesting the profile server/server vendor 100 to provide BPP(s) for injection at the factory; acquiring a BPP to be installed in the eUICC 140 from the profile server/server vendor 100 as a result of the request, and data signed by the profile server 100; storing received BPPs and signed data in the factory IT server 110; or selecting a BPP mapped to the EID of the target UE in which the profile is to be installed, among the received or stored BPPs, and delivering the BPP to the UE mapped in a factory configuration process. A part of information exchanged by the factory IT server 110 with the profile server 100, the SP server 150, and the EUM 160 may be shared between entities that perform corresponding roles (that is, UE manufacturer, profile server operating vendor, service provider, eUICC manufacturer) in a different type through an on/offline channel (for example, email transmission) other than message transmission/reception through inter-server interfaces.

The eUICC manufacturer (EUM) 160 may inject key information for certification for eUICC authentication into the eUICC 140 and provide personalized eUICCs 140 to the UE manufacturer. Alternatively, the eUICC manufacturer (EUM)/EUM server 160 may provide the OEM/factory IT server 110 with predetermined information regarding the corresponding eUICCs 140, including a one-time encryption key. In addition, although not illustrated in the drawings of the disclosure, predetermined information regarding the corresponding eUICCs 140, including a one-time encryption key, may be transmitted from the eUICC manufacturer (EUM)/EUM server 160 to the profile server/server vendor 100 at the request of the OEM 110.

The service provider (SP) 150 provides a network service by using a profile, as described above. The SP/SP server 150 may order the profile server/server vendor 100 profile(s) for the IFPP function such that the profile server 100 generates and prepares the ordered profiles.

Hereinafter, above descriptions of component modules may also be applied to the roles and relations of modules illustrated in the drawings, which are to be described later. In addition, order information exchanged between the profile server/server vendor 100, the factory IT server/OEM 110, the EUM/EUM server 160, and the SP/SP server 150, among the above-described component modules, may be delivered in a different manner, such as interface interworking between servers of respective entities, email, and or the like.

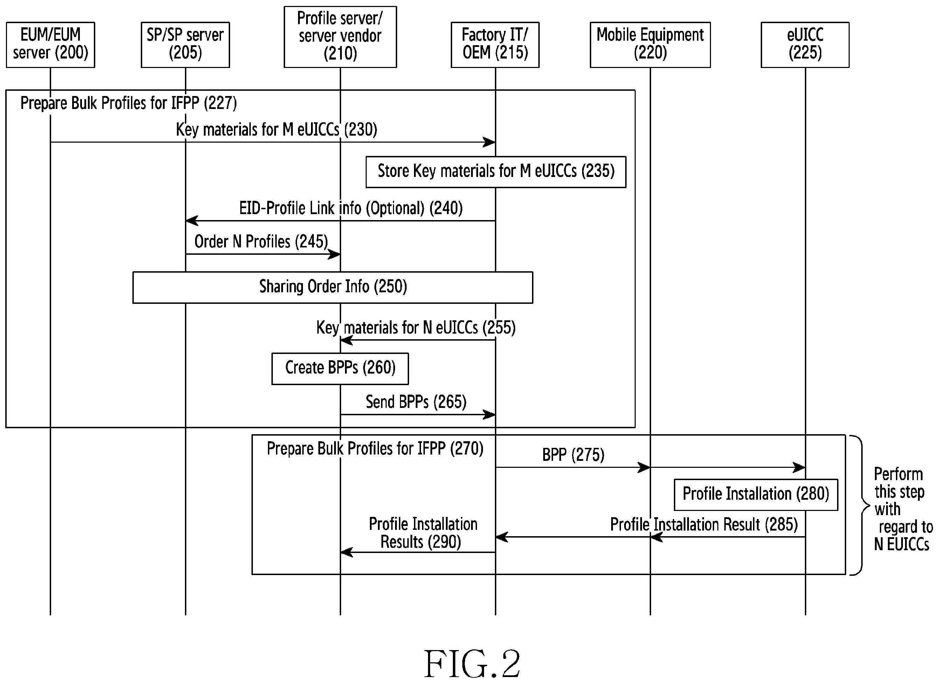

FIG. 2 illustrates operations of provisioning a large amount of profiles according to an embodiment of the disclosure.

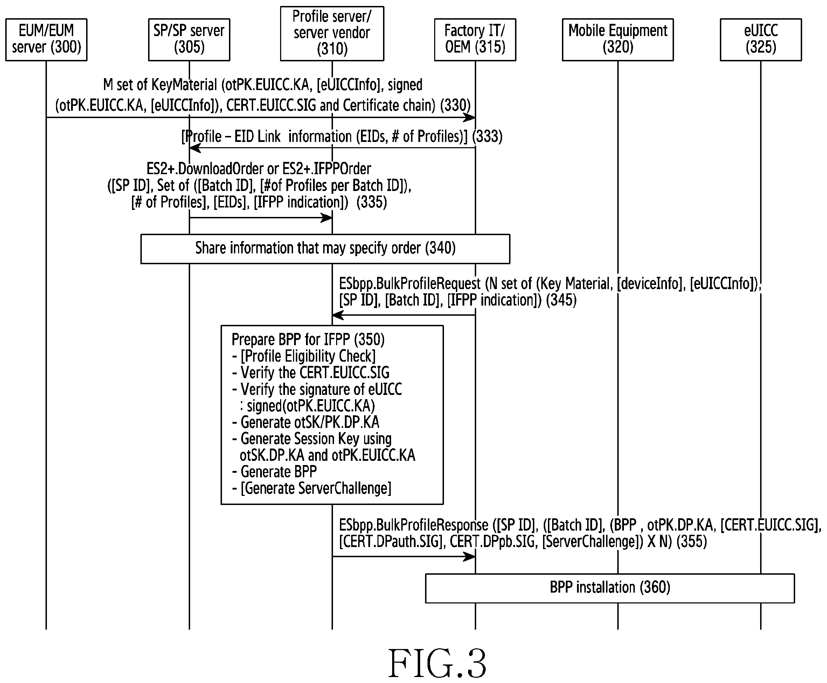

Referring to FIG. 2, the UE manufacturer may preload a profile in an eUICC at the factory and then ship the UE. In this case, profiles may be provisioned in one or more UEs, particularly a large amount of UEs. This step may be subdivided into a step of preparing profiles and delivering the same to the factory IT/OEM 215 (step 227), and a step in which the factory IT installs the same in *N* different eUICCs 225 (step 270). Detailed information exchanged in respective steps in FIG. 2 and embodiments regarding the same will be described later in detail with reference to FIG. 3 to FIG. 6.

In step 227, profiles for IFPP may be prepared and delivered to the factory IT/OEM. A UE manufacturer who wants to manufacturer UEs equipped with eUICCs may order *M* eUICCs through the EUM/EUM server 200, and the EUM 200 may provide the factory IT/OEM 215 with predetermined information including encryption key information regarding the *M* eUICCs that have been ordered (step 230). The predetermined information including encryption key information may be encrypted by the EUM's private key or each eUICC's private key and then transmitted, as will be described later with reference to FIG. 3. Upon receiving an order regarding profiles for IFPP, the EUM/EUM server 200 may provide the factory IT/OEM 215 with the same, including eUICC encryption key information necessary for BPP decryption with regard to each eUICC. Upon receiving the same, the factory IT/OEM 215 may store encryption key information regarding *M* eUICCs that have been ordered in the factory IT server 215 (step 235).

Thereafter, at a specific timepoint, the factory IT/OEM 215 may determine to load profiles in all or some *(N)* of the *M* eUICCs that have been ordered by the EUM 200. This may be based on the request of the service provider (SP)/SP server 205 to preload profiles before shipping.

As an additional optional procedure, the factory IT/OEM 215 may deliver at least one piece of information from among the number of profile(s) and the list of EID(s) to the SP/SP server 205 such that the SP/SP server 205 prepares profiles linked to EIDs in advance (step 240). The SP/SP server 205 may order the profile server/server vendor 210 profiles (step 245). In case that the SP/SP server 205 has previously performed step 240 to have an EID list, or has acquired the EID list at a specific previous timepoint, the SP/SP server 205 may order the profile server/server vendor 210 profiles including EID information.

In addition, step 240 in which the factory IT/OEM 215 provides an EID list to the SP/SP server 205 may occur at a specific timepoint before the occurrence of the procedure in which the profile server/server vendor 210 generates a BPP in step 260. Upon receiving the same, the SP/SP server 205 may provide the EID list to the server/server vendor 210 prior to step 260. Alternatively, the factory IT/OEM 215 may directly deliver EIDs to the profile server/server vendor 210 prior to step 260 without going through the SP/SP server 205 (that is, without step 240). The SP/SP server 205, the profile server/server vendor 210, and the factory IT/OEM 215 may share information that may specify the corresponding order with each other (step 250). The information that may specify the corresponding order may be shared as identification information provided from the SP/SP server 205 or the profile server/server vendor 210 to the factory IT/OEM 215. As an example, the identification information may be at least one of information such as batch ID/order ID, the ordered profile list or EID list, information regarding the first and last numbers of the profile list or EID list, the factory serial number, or the producer identification number.

The factory IT/OEM 215 may deliver *N* pieces of key information corresponding to eUICCs of target UEs, in which profiles are to be loaded by the service provider (SP) 205, among the key information of eUICCs acquired in step 230, to the profile server/server vendor 210 (step 255). The key information corresponding to eUICCs of target UEs may be all or part of the key information received in step 230 described above. The profile server/server vendor 210 may combine information collected in at least one step from among a step of collecting the profile order information received in step 245, a step of collecting the profile-EID link information received in step 240, a step of collecting the order information mutually shared in step 250, and a step of collecting encryption key information of target eUICCs in which the profile received in step 255 is to be installed. The profile server 210 may thus generate encrypted profile packages (step 260), and may provide the factory IT/OEM 215 with the generated profile packages and eUICC binding-related information (step 265). The profile server 210 may transmit the generated encrypted profile packages and each piece of BPP encryption key information to the factory IT/manufacturer 215 through one or more messages, and all or part of the data transmitted through the message may be provided as signed data.

In step 270, an operation in which the factory IT 215 installs profiles for IFPP in eUICCs may be described. This step may be performed with regard to N eUICCs.

The factory IT/OEM 215 may inject profiles into UEs at the factory and then ship the same. To this end, the factory IT/OEM 215 may acquire and store a series of pieces of encryption key information necessary for profile decryption in a BPP and an eUICC by the factory IT 215. The series of pieces of encryption key information may include the eUICC's one-time public key (hereinafter, referred to as otPK.eUICC.KA).

The series of pieces of encryption key information necessary for profile decryption in a BPP and an eUICC by the factory IT 215 may be transmitted from the factory to individual UEs 220 through wired/wireless networks in the factory. The BPP and series of pieces of encryption key information may be included in one or more messages and then transmitted to the UE 220. In case that the otPK.eUICC.KA is included therein and transmitted, the otPK.eUICC.KA may be included in signed data from the profile server and then received by the UE 220. As an example, the same may be included in data signed by one of the following and then received. Obviously, the following examples are not limitative.
- SK.DPauth.SIG: the profile server's secret key used by the profile server to use authentication of the profile server
- SK.DPpb.SIG: a private key used by the profile server for the profile server's profile binding
- SK.DPxx.SIG: the profile server's private key defined such that xx denotes IFPP usage

As described above, SK.DPpb.SIG may be the profile server's secret key used by the profile server for profile binding, or the profile server's secret key used by the profile server for IFPP usage. In DPxx.SIG, the usage is indicated by xx, which may be marked by specific information indicating IFPP usage.

The UE 220 may provide a function of receiving BPP(s) from the factory IT 215 and injecting the BPP(s) into the eUICC 225 in an IFPP mode. For example, the UE 220 may operate in a factory provisioning mode at the timepoint at which the BPP is received, or the UE 220 may recognize that the same has to enter IFPP at which the BPP is received and then initiate operations. Alternatively, the UE 220 may enter the corresponding mode by recognizing an event input to the factory worker's UE, or a configuration value, or a specific virtual private network (VPN), for example. Meanwhile, entering the IFPP mode by a UI or configuration value may be provided by a UI which is limited and thus is not displayed to the user in normal environments. The UE 220 may deliver a BPP to the eUICC 225 via the LPAf (not illustrated), as described above, or may deliver the same to the eUICC 225 without going through the LPAf (not illustrated) (step 275).

As an example of the message delivered to the eUICC by using the LPAf (not illustrated), the same may be included in one or more messages of ES10x and then transmitted. Hereinafter, detailed embodiments will be described later with reference to FIG. 4 to FIG. 6.

The message received by the eUICC 225 from the UE 220 may include information that may indicate an operation for IFPP. Based on the message received by the eUICC 225 from the UE 220, the same may determine to perform an IFPP usage profile installation operation, and may enter the same. The information that may indicate an operation for IFPP may be a new function defined for IFPP, or an IFPP identifier parameter may be added to an ES10x message defined by legacy SGP.21/22 or SGP. 31/32. Alternatively, the same may be factory shipping identification information which is not included for (consumer-oriented, or M2M-oriented, or IoT-oriented) profile provisioning in normal environments after UE shipping. As an example, the same may be one of values such as the factory serial number, batch ID, and producer identification information. Obviously, this is not limitative.

As described above, the UE 220 may receive data including otpk.eUICC.KA from the profile server, and the data including otpk.eUICC.KA may be included in data signed by one of the following and then received. Obviously, the following examples are not limitative.
- SK.DPauth. SIG: the profile server's secret key used by the profile server for authentication of the profile server
- SK.DPpb.SIG: the profile server's secret key used by the profile server for the profile binding
- SP.DPifpp.SIG: the profile server's secret key specified for IFPP and used by the profile server

The UE 220 may deliver signed data to the eUICC 225 again via the LPAf or without going through the LPAf. The eUICC 225 may verify the signature of the profile server 210 regarding the data received by the eUICC 225, may generate a session key by using the eUICC's one-time secret key (otSK.EUICC.KA) stored in advance, and may decrypt the BPP, thereby processing the installation (step 280).

The eUICC 225 may transmit the profile installation result to the UE via the LPAf or without going through the LPAf such that the UE sends a reply to the factory IT sever 215 (step 285).

The factory IT 215 may forward the profile installation result to the profile server/server vendor 210. The factory IT/OEM 215 may forward individual profile installation results to the profile server/server vendor 210, or may collect the profile installation results and then provide a batch thereof to the profile server/server vendor 210 at a specific timepoint. In addition, the profile server/server vendor 210 or the factory IT/OEM 215 may selectively provide profile installation result(s) to the SP/SP server 205.

FIG. 3 illustrates operations of preparing profiles in order to provision a large amount of profiles according to an embodiment of the disclosure. FIG. 3 illustrates a detailed procedure regarding step 227 in FIG. 2. In addition, as will be described later, FIG. 3 illustrates an example of preparing a BPP for the factory IT/OEM prior to performing the procedures in FIG. 4 to FIG. 6, and BPP acquisition is not limited to the procedure in FIG. 3 prior to performing the procedures in FIG. 4 to FIG. 6.

Referring to FIG. 3, the factory IT/OEM 315 who wants to load eUICCs may order the EUM/EUM server 300 eUICCs. The EUM 300 may make a pair of otSK/PK and EUICC.KA used by eUICCs in advance and may ship eUICCs equipped with otSK.EUICC.KA to the factory IT/OEM 315, each delivered eUICC including at least one of the following: otPK.EUICC.KA, [eUICC Info], [EID], data (referred to as "signed (otOK.EUICC.KA, [eUICC Info] in step 330 in FIG. 3), including otPK.EUICC.KA signed by a secret key of the eUICC or EUM, eUICC signature, the eUICC's certificate (CERT.EUICC.SIG) and certificate chain, EID, or PK.EUICC.SIG. Information delivered from the EUM 300 to the factory IT/OEM 315 may be transmitted as the EUM's signed data or non-signed data. If transmitted as the EUM's signed data, the same may further include the EUM's signature value (eumSignature) and the EUM certificate or EUM's public key (PK.EUM.SIG). In addition, among the transmitted information, pieces of information commonly applied to the corresponding eUICCs order (for example, eUICC Info) may be transmitted without being included redundantly with regard to each eUICC. (Step 330) as described above, otPK.EUICC.KA may be signed by the EUM's secret key and transmitted. In case that otPK.EUICC.KA is signed by the EUM's secret key and transmitted, the same may not include the eUICC's signature value and/or eUICC-specific certificate.

Transmitted information may be delivered through an interface that interworks with the factory IT 315 in the profile server or delivered through other on/offline methods. Each piece of transmitted information may represent the following. Obviously, the following examples are not limitative.
- otPK.EUICC.KA: the eUICC's one-time public key used to generate a session key between the profile server and the eUICC
- SK (data including otPK.EUICC.KA): data including otPK.EUICC.KA signed by the eUICC's secret key. The same is indicated by "euiccSignature" in the following data format example.
- CERT.EUICC.SIG and certificate chain: refer to an eUICC certificate and a chain of certificates for verifying the eUICC certificate.
- CERT.EUICC.SIG includes the eUICC's unique identification number (EID) and a public key (PK.EUICC.SIG) for decrypting the eUICC signature. The same is also used to verify whether the eUICC has been authenticated by the EUM.
- CERT.EUICC.SIG's upper-level certificate chain may include a certificate (CERT.EUM. SIG) including an EUM public key.
- eUICC Info: information regarding eUICC capability. The same may or may not include an indication regarding capability indicating whether the eUICC supports IFPP. In case that eUICC Info has the same eUICC capability with regard to a specific order case, the same may be transmitted with regard to the order case, not with regard to each eUICC.
- EID: unique identification number allocated with regard to each eUICC
- PK.EUICC.SIG: the eUICC's public key for decrypting the eUICC signature. The same may be transmitted as a value included in CERT.EUICC.SIG or may otherwise be transmitted through a separate parameter.

An example of the delivered data format is given in Table 1 below:

**[Table 1]**

| |
|---|
| ```
 --ASN1START
 EuiccData ::= SEQUENCE {
         euiccOrderId OctetTo16, -- Each unique Order ID
    euiccInfo2 [34] EUICCInfo2, - as defined in the SGP.22 [2]
         kmList [58] SEQUENCE OF KeyMaterial,
         nextCertInChain Certificate, -- The Certificate certifying the eUICC Certificate
         otherCertsInChain [1] CertificateChain OPTIONAL, -- Other Certificates in the
    eUICC certificate chain, if any
 KeyMaterial ::= SEQUENCE {
         eidValue [APPLICATION 26] Octet16, -- tag '5A'
         euiccfSigned,
         euiccfSignature [APPLICATION 55] OCTET STRING, -- tag '5F37'
         euiccCertificate Certificate -- eUICC Certificate (CERT.EUICC.SIG)
 EuiccfSigned ::= SEQUENCE {
         euiccOtpk [APPLICATION 73] OCTET STRING, -- otPK.EUICC.KA to be used for
 binding a Profile, tag '5F49'
         additionalInformation VendorSpecificExtension OPTIONAL, -- as defined in the SGP.22
``` |
| ```
 [2] 2.4a.1.8
 }
 --ASN1STOP
``` |

Upon receiving the corresponding information, the factory IT/OEM 315 may store the corresponding information and, at a specific time, may determine to load profiles in all or some (N) of *M* eUICCs ordered by the EUM 300. Alternatively, the SP may request the factory IT/OEM 315 to preload corresponding profiles in UEs 320 to be shipped.

As an additional optional procedure, the factory IT/OEM 315 may deliver at least one piece of information from among the number of profiles and information of EID(s) to the SP/SP server 305 such that the SP/SP server 305 prepares profiles linked to EIDs in advance (step 333).

The SP/SP server 305 may order the profile server/server vendor 310 profiles (step 335).

In case that the SP/SP server 305 has acquired and held EID lists in step 333 or at a previous specific timepoint, the SP/SP server 305 may order the profile server/server vendor 310 profiles including EID information. The profile order message may be defined to include IFPP order identification information in addition to the ES2+ order interface between the service provider and the profile server defined by legacy GSMA RSP, or a new function. The order message may include at least one of the following pieces of information. Obviously, the following information is not limitative. The batch ID is used to identify a group's profile order, and may be used interchangeably with other terms such as profile order ID and bundle order ID.
- Batch ID indicating a bundle of order profiles
- ICCID Lists or the number of profiles allocated with regard to each batch ID
- The number of order profile(s)
- ICCID(s)
- EID(s) requiring linked profiles
- Service provider (SP) ID
- Profile server address for preparing order profiles (for example, FQDN-type address)
- IFPP order identifier (IFPP indication)
- Factory IT serial number used to deliver the generated BPP
- OEM identification number (producer number) used to deliver the generated BPP

As the IFPP order identifier, IFPP indication or batch ID may be included in one of profile type data values of the ES2+ order interface and then transmitted.

The profile server 310 may support only IFPP, or may support IFPP as one of the profile server's functions. For example, the profile server 310 may support SGP.21/22 (specifications for provisioning profiles in consumer UEs such as smartphones) defined by GSMA, or SGP.31/32 (specifications for provisioning profiles in UEs specialized for IoT), and may additionally support functions for profile provisioning at the factory. Upon receiving the profile download order, the profile server 310 may determine whether there is IFPP determination information with a new function defined by IFPPOrder or a new parameter of legacy ES2+.DownloadOrder, may recognize that the order is for IFPP and for profile preparation, and may manage the same accordingly. This may be, for example, the above-described IFPP order identifier or batch ID. Meanwhile, in case that the EID has not been received together in step 335, the profile server 310 may change the state of the corresponding profile to "allocated". In case that the EID has been received together in step 335, the EID may be connected to the ICCID such that the state of the profile is changed to "linked" and then prepared.

The SP/SP server 305 or the profile server/server vendor 310 may share information that may specify the corresponding order with the factory IT/OEM 315 (step 340).

The SP/SP server 305 or the profile server/server vendor 310 may share information such that the factory IT/manufacturer 315 can recognize whether the case is related to the same order. That is, the profile server 310 may later receive a profile download request. (Step 345) when the profile server 310 receives a profile download request, mapping with profiles previously requested by the SP and prepared is necessary, and order information may be shared between the SP, the factory IT, and the profile server to this end. As an example, the order information that may be shared may be at least one of the following: the batch ID, the address of the server that has stored profiles, identification information of the service provider who has requested profile generation, information such as the first and last numbers of the ordered profile list or EID list or, or the ordered profile list, the EID list, the factory IT identification number.

In step 345, the factory IT/OEM 315 may inject a profile into a UE at the factory and then ship the same. To this end, the factory IT/OEM 315 may request the profile server 310 to provide a BPP prepared for IFPP.

As a method for indicating an IFPP request to the profile server 310 by the factory IT 315, the profile server 310 may determine at least one of the following cases: a message is transmitted by a new function indicating a BPP request for IFPP, an IFPP identification indication is transmitted to ES9+. Function, or a parameter (for example, at least one piece of information from among otPK.eUICC.KA, Batch ID, or SP ID) requested only for corresponding IFPP is included and transmitted. An example of ES9+. Function described above may be a message such as ES9+. GetBoundProfilePackage. Meanwhile, in a BPP request for IFPP or one of pieces of data of a series of subsequent messages involving the BPP generation request, the factory IT/OEM 315 may deliver, to the profile server/server vendor 310, as many pieces of key information including otPK.EUICC.KA corresponding to the eUICC of corresponding target UEs as the number of UEs in which profiles are to be loaded by the service provider (SP) 305, among key information of eUICCs acquired in step 330. In addition, the factory IT/OEM 315 may selectively include eUICC info in one of pieces of data of a series of subsequent messages involving the BPP generation request and then transmit the same to the profile server/server vendor 310, as eUICC capability information or device info as the UE's capability as additional information provided for BPP generation.

In case that the profile server/server vendor 310 has received a message that indicates a BPP request for IFPP from the factory IT 315 and has received key information regarding otPK.eUICC.KA, the profile server/server vendor 310 may determine that a BPP for IFPP is to be prepared, and the profile server 310 may thus perform a step of generating a BPP for IFPP. (Step 350) The profile server 310 may enter a process of generating a BPP which is an encrypted profile package in an IFPP mode. The case in which the profile server 310 makes a determination regarding generation of a BPP for IFPP may correspond to a case of receiving a message from the factory IT 315, the message including information indicating the same (for example, information including at least one from among a new function defined for IFPP, a new IFPP indication indicating a profile download request at a factory in a legacy ES9+ message, or a new parameter (encryption key information or the like)). If the profile server/server vendor 310 determines that a BPP for IFPP is to be generated, the profile server 310 may generate a BPP for IFPP, including at least one of the following procedures. Obviously, the following examples are not limitative.
- Profile eligibility check
- Prior to performing profile downloading, the profile server 310 may selectively perform a procedure of identifying whether the profile type received through the ES2+ order interface from the SP is appropriate for installation in the target UE/EID. In case that at least one piece of information from among EID, eUICC Info, Device Info is received through steps 335 to 345, it may be optionally determined whether the profile order received in step 335, particularly the profile type specified in the order can be installed. Accordingly, the profile server 310 may or may not perform certification, including whether the profile for IFPP can be installed in the EID/UE.
- Verification of CERT.EUICC.SIG which is the eUICC's certificate
   : The profile server 310 may perform verification in case of receiving CERT.EUICC.SIG in step 345. The profile server 310 may verify CERT.EUICC.SIG received in step 345 with the EUM's certificate. CERT.EUICC.SIG may include an EID, and the EID may be configured by a series of numbers including one of EINs in the EUM certificate. The profile server may identify whether the EID included in CERT.EUICC.SIG matches with one of allowed EINs included (EUM identification IDs) in CERT.EUM.SIG which is the EUM certificate, thereby authenticating whether the CERT.EUICC.SIG is a legitimate eUICC.
- Verification of the eUICC's signature
   : The profile server 310 may decrypt the secret key of an eUICC used to sign data including otPK.EUICC.KA with the public key of an eUICC included in CERT.EUICC.SIG. According to an embodiment of the disclosure, in case that otPK.EUICC.KA has been signed by the EUM's secret key and then received in step 345, the profile server may perform decryption with the EUM's public key included in CERT.EUM. SIG.
- otSK/PK.DP.KA
   : A pair of the profile server's one-time secret key and public key may be generated.
- Generating a session key with otSK.DP.KA and otPK.EUICC.KA
   : The profile server 310 may generate a shared secret value to be used for a specific profile transmission session by using otSK.DP.KA and otPK.EUICC.KA.
- ServerChallenge
   : In case that the factory IT/OEM 315 requests the profile server 310 to perform a transmission including corresponding information in step 345 or in the step that precedes step 345, the profile server 310 may generate the same.
- The same may be provided in case that the eUICC 325 is designed such that the server challenge value sent to the eUICC 325 by the profile server 310 can be sent as it is in the procedure of mutual authentication between the profile server 310 and the eUICC 325.
- Bound profile package (BPP)
   : a session key, a key replacement package, ISD-P generation and configuration information may be included to generate a profile packet bound with the EID.

If the profile server 310 successfully generates a BPP for IFPP in step 350, the profile server/server vendor 310 may transmit the BPP and a series of pieces of information necessary to install the BPP to the factory IT/OEM 315 through one or more messages. (Step 355) In case that the factory IT 315 has registered a push service in the profile server 310 at the previous BPP requesting timepoint, the BPP and a series of pieces of information necessary to install the BPP may be included in a push message and then transmitted at the timepoint at which the profile server 310 has prepared the same, in step 350. In an alternative procedure, the profile server 310 may inform that a profile has been prepared through a push message, and the factory IT 315 may accordingly access the profile server 310 and acquire the same.

The profile server/server vendor 310 may transmit the generated BPP and a series of profile server encryption key information lists required for BPP verification by the mapped eUICC to the factory IT/OEM 315 through one or more messages. Corresponding encryption key information, for example, the profile server's public keys (for example, PK.DPxx.SIG) may be delivered while being included in a certificate or without being included in a certificate. In addition, information transmitted by the profile server/server vendor 310 may include order identification information, for example, service provider ID or batch ID or order ID. The information transmitted by the profile server/server vendor 310 may be, as an example, a message such as ESbpp.BulkProfileResponse ([SP ID], ([Batch ID], (BPP including otPK.DP.KA, [CERT.EUICC.SIG], [CERT.DPauth.SIG], CERT.DPpb.SIG, [ServerChallenge], [otPK.EIUCC.KA]) X N, SM-DPf Certificate Chains).

The information transmitted by the profile server/server vendor 310 may be, as another example, a message such as ESbpp.GetBoundProfilePackageforIfpp response (batchOrderId, ([EID], BPP including otPK.DP.KA, CERT.DPpb.SIG, eUICC Signature, [otPK.EUICC.KA])X N, Device Info, eUICC Info, SM-DPf Certificate Chains).

In step 355, otPK.EUICC.KA may be included and transmitted, and may be transmitted as signed information if included and transmitted. otPK.EUICC.KA may be included in one of ES8+ included in the BPP and transmitted, or may be transmitted without being included in the BPP.

The information delivered in step 355 may be configured as one or more messages, delivered to the factory IT/OEM 315, and stored in the factory IT 315.

The factory IT 315 may map received BPPs, the EID mapped with regard to each BPP, and encryption key information for downloading and installing the BPP in the corresponding EID, may store the same, and may then perform profile provisioning. (Step 360) the corresponding procedure may include a procedure in which the factory IT 315 transmits a BPP and encryption key information for downloading and installing the BPP in the corresponding EID to the UE 320, the UE 320 delivers the BPP and encryption key information for downloading and installing the BPP to the eUICC 325, and the eUICC 325 verifies the delivered BPP and encryption key for installing the same, and installs the profile.

In the procedure of installing a BPP from the UE 320 to the eUICC 325, the same may be delivered to the eUICC 325 via the LPAf (not illustrated) or delivered to the eUICC 325 without going through the LPAf. As an example of a message delivered to the eUICC by using the LPAf, the same may be included in at least one message of ES10x and transmitted. In addition, transmission from the UE may be made in one of the following methods. Obviously, the following methods are not limitative.
- Three steps according to legacy SGP.22, including a procedure of authentication between the server and eUICC, a procedure of sharing information in advance for profile installation, and a BPP installation procedure, are reused and process the same
- In the three-step procedure according to SGP.22 described above, the procedure of authentication between the server and eUICC and BPP installation procedure are reused to process the same in two steps
- A new function configured by one step is defined to deliver a BPP and BPP-related key information from the UE 320 to the eUICC 325 in a batch manner

Hereinafter, a detailed procedure regarding BPP installation will be described with reference to FIG. 4 to FIG. 6.

FIG. 4 illustrates operations of installing a profile from the factory IT to the eUICC in FIG. 2 according to an embodiment of the disclosure. The profile preparing procedure (steps 430, 530, 630) in FIG. 4 to FIG. 6 may be performed as the preparation procedure in FIG. 3 or as the preparation procedure described later with reference to FIG. 2, but is not limited thereto. That is, even if the method in FIG. 2 to FIG. 3 is not followed, in case that the profile server has generated and prepared a BPP and an encryption key, a profile installation procedure may then be processed as in FIG. 4 to FIG. 6. FIG. 4 illustrates a method wherein the above-described three-step procedure of SGP.22 are reused to perform and process all of the procedure of authentication between the server and eUICC, the procedure of sharing information in advance for profile installation, and the BPP installation procedure.

Referring to FIG. 4, if a BPP for IFPP is prepared, the factory IT 415 may acquire key information related to the corresponding BPP, which is mapped to N bundles of eUICCs, and may store the same. The factory IT 415 may transmit the key information related to the corresponding BPP to the UE 420 mapped in the process of provisioning configuration values for the UE at a specific timepoint prior to shipping the UE. (Step 435) the factory IT 415 may identify the UE ID and/or EID in the process for provisioning profiles at the factory, may select encryption key information related to the mapped BPP, and may transmit the same to the UE 420, or may receive the UE's request message and transmit a message in response thereto.

Information delivered to the UE 420 in step 435 may include a BPP (including otPK.DP.KA) and, as encryption key information, at least one from among [CERT.DPauth.SIG], CERT.DPpb. SIG, [ServerChallenge], [otPK.EUICC.KA], [dpSignature1], or dpSignature2. Obviously, the following description is not limitative.
- CERT.DPauth.SIG: a profile server certificate used to authenticate the profile server itself. The same may include PK.DPpb.SIG which is a public key necessary to verify the signature value used by the profile server to authenticate the profile server.
- CERT.DPpb.SIG: a profile server certificate. The same may include PK.DPpb.SIG which is a public key necessary to verify the signature value of the profile server used for binding between the profile and the eUICC.
- otPK.DP.KA: may be used by the eUICC to generate a shared secret value used for a profile download and transmission session with the profile server.
- ServerChallenge: may be included in data for profile server authentication and may be provided as data signed by the profile server's secret key (SK.DPauth.SIG) used to authenticate the profile server.
- otPK.EUICC.KA: may be included in data for profile server authentication or may be included in data for profile binding and then transmitted. The same may include corresponding information and may be transmitted as data signed by the profile server (for example, included in one of dpSignature1 or dpSignature2). otPK.EUICC.KA may not be transmitted.
- dpSignature1: may represent data signed by the profile server's secret key (SK.DPauth. SIG) corresponding to the public key included in CERT.DPauth. SIG.
- dpSignature2: may represent data signed by the profile server's secret key (SKDPpb.SIG) corresponding to the public key included in CERT.DPpb.SIG.

The case in which the UE 420 enters the IFPP mode (step 440) may correspond to at least one of the following cases: a function for downloading a profile for IFPP is received, the UE 420 configuration at the profile provisioning timepoint has entered a state such as factory provisioning/configuration, or the same enters a menu selection for the user's profile provisioning in factory environments.

In case that the UE 420 is already configured in a state such as at-factory profile provisioning/ provisioning configuration, the UE may recognize that the same already has to perform a profile download procedure in an IFPP mode prior to receiving a new function for downloading a profile for IFPP, and may instantly enter the corresponding mode. For example, when entering the LPA in a factory configuration state, the UE may automatically enter an IFPP profile configuration mode. Accordingly, entering the IFPP mode (step 440) may be configured prior to receiving a new function, for example, a function such as ESfac.prepareFactoryDownload (including BPP (including otPK.DP.KA), [CERT.DPauth.SIG], CERT.DPpb.SIG, [ServerChallenge], [otPK.EUICC.KA], [dpSignature1], dpSignature2) received by the UE 420 in step 435. In case that [CERT.DPauth.SIG], CERT.DPpb.SIG further have certificate chains, the certificate chains may be included and transmitted. That is, additional certificate chain information may be further included and transmitted in step 435, and the additional certificate chain information may then be included in at least one of steps 445, 460, or 475 and transmitted to the eUICC 525. In step 435 described above, upon receiving a message requesting an IFPP profile download procedure to be performed, the UE 420 and the eUICC 425 may perform profile installation by reusing the profile installation process after UE shipping defined by legacy SGP.22.

Currently, SGP.22 requires a mutual authentication process to be performed in the profile installation process. In the mutual authentication process, the eUICC and the profile server generate random values and verify values signed by the delivered random values, thereby authenticating each other. For example, the eUICC generates an eUICC challenge value as a random value and transmits data including the same to the profile server. The profile server signs the eUICC challenge with the profile server's secret key and then returns the same to the eUICC. The eUICC verifies the value signed by the profile server's secret key by the profile server's public key, and determines whether the eUICC challenge value included in the data transmitted by the profile server is identical to the value that the eUICC has previously generated and sent, thereby authenticating the profile server. Likewise, the profile server generates a server challenge value and transmits the same to the eUICC. The eUICC signs data including the value and returns the same. The profile server verifies the value signed by the eUICC's secret key by the eUICC's public key and determines whether the server challenge value included in the data transmitted by the eUICC is identical to the value that the profile server has previously generated and sent, thereby authenticating the eUICC.

In the process of provisioning profiles at the factory, the eUICC challenge value and the server challenge value for mutual authentication between the profile server 410 and the eUICC 425 cannot be generated and delivered in real time, and the corresponding values may thus be delivered as pre-generated information. For example, the eUICC challenge returned to the eUICC by the profile server may be a random value acquired by the profile server and pre-generated by the eUICC in the profile ordering/generating steps in FIG. 2 to FIG. 3. This may be, for example, otPK.EUICC.KA value.

Meanwhile, the profile server may be unable to perform eUICC authentication as a method in which the eUICC returns the eUICC's signature data, including a server challenge, to the profile server such that the profile server verifies the data, in the process of provisioning profiles at the factory. Therefore, the eUICC 425 may authenticate the profile server 410, but the profile server 410 may not authenticate the eUICC 425 during the profile downloading process. As an example, the profile server may perform no authentication during the profile downloading process, and the profile server 410 may verify otPK.EUICC.KA signed and delivered by the eUICC in the preceding profile preparation step (for example, step 350 in FIG. 3) and may then generate a BPP, thereby authenticating the eUICC 425 in advance.

Meanwhile, in order to simulate the mutual authentication process of SGP.22, the profile server 410 may provide the factory IT 415 with data signed by the server, the data including the server challenge value transmitted to the eUICC 425 by the profile server 410 optionally in the legacy ES10x procedure. Upon receiving the data signed by the server, the factory IT 415 may transmit the server challenge value transmitted to the eUICC 425 by the profile server 410 to the UE 420 such that the UE 420 delivers the same to the eUICC 425. The profile server 410 may generate the server challenge upon receiving a BPP generation request or at a preceding timepoint and may then provide the same.

The LPAf (not illustrated) of the UE 420 may enter IFPP and may transmit data including an eUICC challenge as server authentication information to the eUICC 425. The data may be transmitted as data signed by the server. (Step 445) as an example, the same may be a message such as ES10b.AuthenticateServer (Data1(Including otPK.EUICC.KA), dpSignature1, CERT.DPauth.SIG). dpSignature1 may be a value signed by the secret key of the profile server 410. Upon receiving the message, the eUICC 425 may verify the profile server 410 (step 450), and otPK.EUICC.KA may be used to verify the signature of the profile server and eUICC challenge. In step 450, the verification procedure in which the eUICC 425 authenticates the profile server 410 may be performed while including one of the following procedures. Obviously, the following procedures are not limitative.
- The eUICC 425 verifies the profile server's signature: the same is verified by comparing the value obtained by decrypting dpSignature1 with a public key (for example, PK.DP.SIG) that is included or not included in the received profile server's certificate and the value of Data1(Including otPK.EUICC.KA), thereby determining whether the values are identical.
- Verifying CERT.DPauth.SIG certificate chain: the same is verified according to whether the CERT.DPauth.SIG certificate chain and the eUICC's certificate chain are in the same certificate chain.
- Extracting the profile server's public key from CERT.DPauth.SIG

Upon verifying the certificate and signature of the profile server 410, the eUICC 425 may return the result to the LPAf of the UE 420. (Step 455) the eUICC 425 may return an error message to the UE 420 in case of a failure to verify the certificate and signature of the profile server 410 (step 455). Upon receiving the error message, the UE 420 may end the profile installation operation and return the error result to the factory IT 415. (step 485)

If the LPAf of the UE 420 identifies a successful procedure of authenticating the profile server 410 through the message returned in step 455, the LPAf of the UE 420 may transmit preparation information necessary for profile download to the eUICC 425. (step 460)

Meanwhile, above-described steps 445 to 455 may be performed optionally. For example, without performing an authentication procedure using CERT.DPauth.SIG, the same may enter step 460 from step 440 and process subsequent steps. This may correspond to a case in which the message received in step 435 does not include CERT.DPauth.SIG.

Meanwhile, in case that CERT.DPauth.SIG is not received, CERT.DPpb.SIG may be used for profile server authentication in addition to profile binding.

In case that steps 445 to 455 have been performed, the eUICC 425 may operate based on a determination that step 445 corresponds to the timepoint to generate an RSP session. In case that steps 445 to 455 have not been performed, the eUICC 425 may operate based on a determination that the timepoint at which a message is received in step 465 corresponds to the timepoint to generate an RSP session. In this case, if the eUICC 425 has already been in possession of a pre-generated RSP session prior to receiving the message, the eUICC 425 may delete the pre-generated RSP session, may not delete otPK.EUICC.KA and otSK.EUICC.KA, which have not been used finally in the previous RSP session (because profile installation has not been completed), may store the same, and may then start a new RSP session.

The message transmitted in step 460 described above may include at least from among Data2 including otPK.EUICC.KA, dpSignature2 which is a value used to sign corresponding data, or CERT.DPpb.SIG. As an example, the same may be defined by a new function for IFPP, such as ES10b. PrepareDownload for IFPP. otPK.EUICC.KA may also be transmitted as a value corresponding to bppeUICCOtpk of Data2.

Upon receiving the message, the eUICC 425 may perform a verification procedure to prepare profile download (step 465). In step 465, the eUICC 425 may perform operations including at least one of the following procedures. Obviously, the following procedure are not limitative.
- Verifying CERT.DPpb.SIG certificate chain: verifying whether CERT.DPpb.SIG certificate chain and the eUICC's certificate chain are in the same certificate chain
- Verifying the profile server's signature: a value obtained by decrypting dpSignature2 with the public key of the profile server extracted from CERT.DPpb.SIG is compared with the value of Data2(Including otPK.EUICC.KA) to identify whether they have the same value
- Identifying whether CERT.DPauth. SIG and CERT.DPpb. SIG have the same owner ID (this procedure may not be performed in case that steps 445 to 455 have not previously been performed.)
- Extracting the profile server's public key from CERT.DPpb.SIG
- Identifying whether there is otSK.EUICC.KA corresponding to received otPK.EUICC.KA
- Attaching the identified otSK.EUICC.KA and/or otPK.EUICC.KA to the corresponding RSP session
- Attaching certificate chain-verified CERT.DPpb.SIG to the corresponding RSP session

Upon completing the above-described procedure including signature verification, the eUICC 425 may transmit the result to the LPAf of the UE 420. (Step 470) in case that otPK.EUICC.KA in received Data2 is transmitted as the value of bppeUICCOtpk, the eUICC 425 that operates in the IFPP mode may not generate a new otPK/SK.EUICC.KA pair in the absence of received otPK.EUICC.KA, and may return an error. In case that data included in received Data2 requires information regarding user interaction (for example, a flag regarding confirmation code input has been set), the eUICC 425 may not return an error in case of operating in the IFPP mode, may silently ignore, and may perform a procedure subsequent to step 475, or may return an error message to the UE 420 (step 470). The UE 420 may end the profile installation operation without performing steps 475 and 480 and may return the error result to the factory IT 415. (step 485)

In step 470 described above, the LPAf of the UE 420 may, after receiving a normal response message with regard to the result, transmit otPK.DP.KA and BPP to the eUICC 425, and otPK.DP.KA may be transmitted as data included in the BPP. Meanwhile, as will be described later, even in case that an error (for example, certificate error) is returned in step 470 as a result of performing step 465 described above, the UE 420 may not perform steps 475 and 480, may end the profile installation operation, and may return the error result to the factory IT 415. (step 485)

The LPAf of the UE 420 may split the BPP into one or more APDUs and then transmit the same to the eUICC. (Step 475) The BPP that is included and transmitted may be encrypted by a session key and then transmitted, and otPK.DP.KA may be transmitted together with the transmitted BPP or while being included in a package. An example of the message transmitted from the LPAf to the eUICC may be a function such as ES10b. LoadBoundProfilePackage, and the transmitted message may include data of ES8+ functions transmitted from the profile server.

The eUICC 425 may receive a series of messages for BPP installation through step 475, and one of the received messages may include otPK.DP.KA. In case that otPK.DP.KA is included in data signed by the profile server and then transmitted, the eUICC 425 may receive the profile server's public key for verifying the signed data (or certificate including the pubic key) together, or may receive the same in the previous step and use the same. This may be, for example, previously acquired PK.DPpb.SIG (or CERT.DPpb.SIG as a certificate including the public key). In case that CERT.DPpb.SIG has previously been received in step 460 as well, and in case that the certificate has been verified in response to the reception, the eUICC 425 may attach CERT.DPpb.SIG to the RSP session in step 465. In case that the eUICC 425 attaches CERT.DPpb.SIG to the RSP session in step 465, the eUICC 425 may omit verification of the certificate chain regarding CERT.DPpb. SIG in step 475, and may use CERT.DPpb. SIG to verify the signature.

The eUICC 425 may receive otPK.DP.KA or may receive and verify data further including otPK.DP.KA, thereby extracting otPK.DP.KA. The eUICC 425 may combine the same with stored otSK.EUICC.KA attached to the corresponding RSP session, thereby generating a shared secret, and may make a session key for profile installation, thereby completing profile installation.

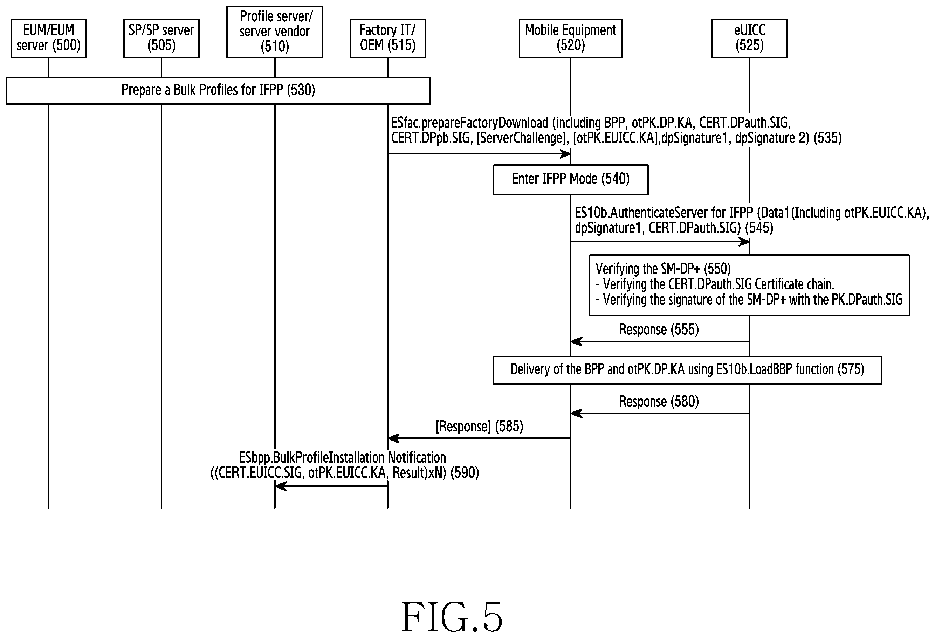

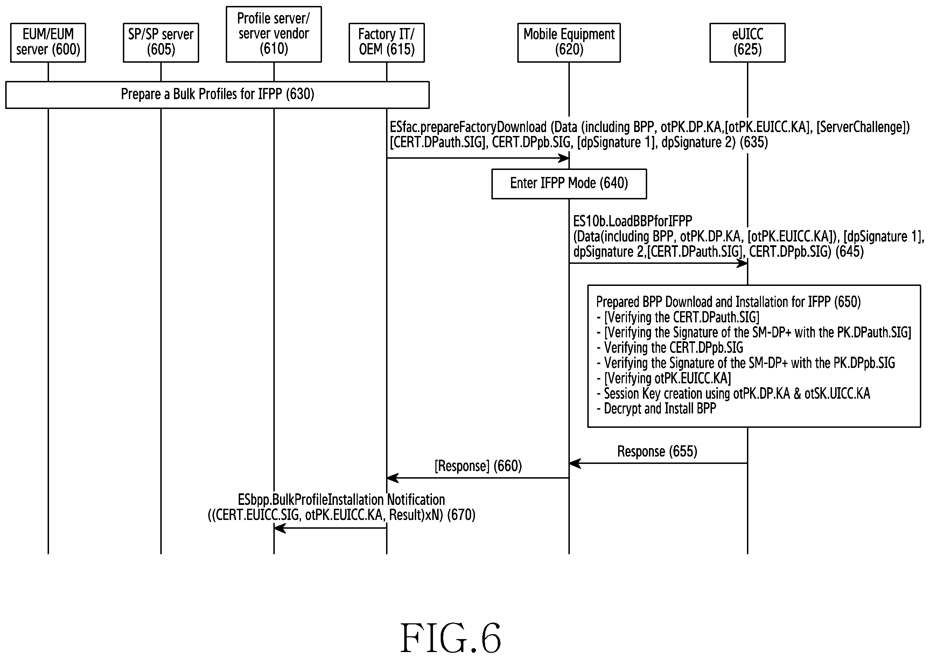

Meanwhile, even though data received in at least one of steps 445 or 460 or 475 does not include otPK.EUICC.KA, the otPK.EUICC.KA may be included in the profile server's signature value and calculated, and the calculated signature value may be received. As an example, the profile server may perform a profile generating procedure as described in FIG. 2 and FIG. 3 prior to step 430, thereby generating a signature value including otPK.EUICC.KA. According to configurations defined based on mutual agreement between the profile server/server vendor 310 and the eUICC 425, the eUICC 425 may generate a signature further including stored otPK.EUICC.KA when calculating the profile server's signature in the process of verifying the profile server's signature with regard to data received in one of steps 445 or 460 or 475, and may then verify the profile server according to whether the corresponding signature value is identical to the received signature value. The stored otPK.EUICC.KA to be used in this regard may be deemed to be otPK.EUICC.KA corresponding to otSK.EUICC.KA attached to the corresponding RSP session, or to be otSK.EUICC.KA attached to the corresponding RSP session. This may be equally applied to step 545 or 550 or 575 in FIG. 5 or step 645 or 650 in FIG. 6, although not additionally described below with reference to the drawings.

The eUICC 425 may forward the profile installation result 480 to the LPAf of the UE 420 (step 480), and the UE may forward the processing result to the factory IT 485. (Step 485) the factory IT/OEM 415 may forward the processing result forwarded in step 485 to the profile server/server vendor 410. (Step 490) the result forwarded in step 490 may include at least one piece of information from among the used EID (or eUICC certificate including the EID), otPK.EUICC.KA, processing result, and the transaction ID received in step 475, in previous steps 445 to 460. In case that corresponding pieces of information are transmitted in a batch mode, the same may be delivered as a list of processing results in multiple UEs. Upon receiving the processing result in step 490, the profile server 410 may identify the BPP processing result and process used value deletion/state update. Meanwhile, although not illustrated in the drawing, the SP/SP server 405 may receive the processing result regarding profile installation through the factory IT/OEM 415 or may receive the same via the profile server/server vendor 410. Meanwhile, it is to be noted that, in case of a failed verification in other drawings of the disclosure, including FIG. 4, the eUICC may transmit the error to the LPAf of the UE or to the entity in the UE that has initiated the procedure, when not going through the LPAf of the UE, and then end the installation procedure.

According to an embodiment of the disclosure, the message transmitted/received in step 460 in FIG. 4 may have a format as in Table 2 below.

In case that only one otPK.EUICC.KA is stored in the eUICC and used, eUICCOtpk may not be provided in step 460 according to configurations between the UE manufacturer and the eUICC manufacturer.

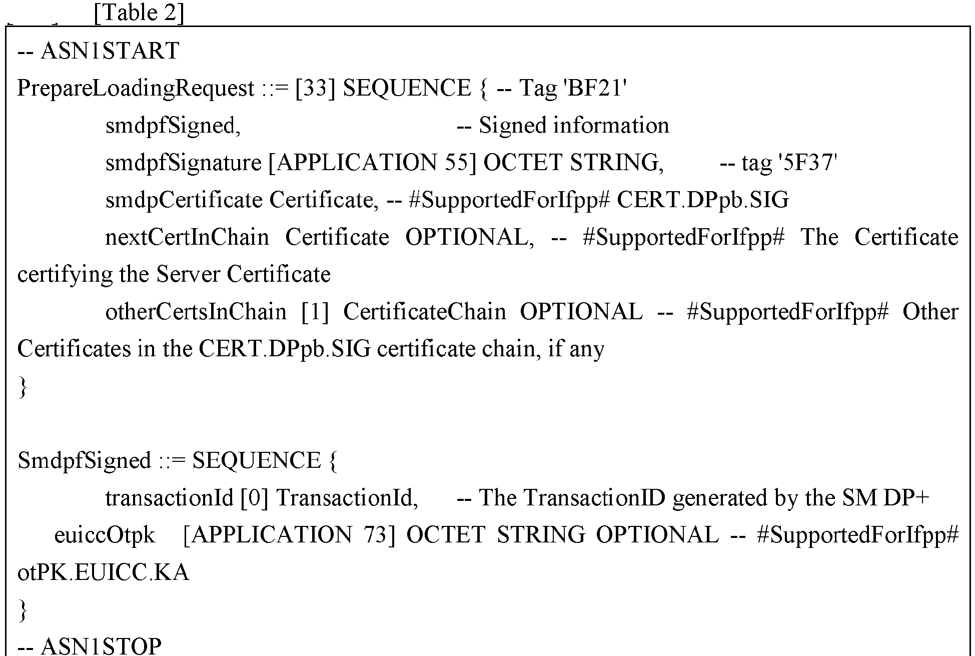

FIG. 5 illustrates operations of installing a profile from the factory IT to the eUICC in FIG. 2 according to an embodiment of the disclosure. FIG. 5 illustrates operations of provisioning a profile by performing a procedure of authentication between the server and the eUICC and a BPP installation procedure, except for the procedure (steps 460 to 470) of sharing information in advance for profile installation described above with reference to FIG. 4.

Referring to FIG. 5, if a BPP for IFPP is ready, the factory IT 515 may acquire key information related to the corresponding BPP, which is mapped to N bundles of eUICCs, and may store the same. The factory IT 515 may transmit the key information related to the corresponding BPP to the UE 520 mapped in the process of provisioning configuration values for the UE at a specific timepoint prior to shipping the UE. (Step 535) the factory IT 515 may identify the UE ID and/or EID in the process for provisioning profiles at the factory, may select encryption key information related to the mapped BPP, and may transmit the same to the UE 520, or may receive the UE's request message and transmit a message in response thereto.

Information delivered to the UE 520 in step 535 may include a BPP (including otPK.DP.KA) and, as encryption key information, at least one from among [CERT.DPauth.SIG], CERT.DPpb. SIG, [ServerChallenge], [otPK.EUICC.KA], [dpSignature1], or dpSignature2.
- CERT.DPauth.SIG: a profile server certificate used to authenticate the profile server itself. The same may include PK.DPpb.SIG which is a public key necessary to verify the signature value used by the profile server to authenticate the profile server.
- CERT.DPpb.SIG: a profile server certificate. The same may include PK.DPpb.SIG which is a public key necessary to verify the signature value of the profile server used for binding between the profile and the eUICC.
- otPK.DP.KA: may be used by the eUICC to generate a shared secret value used for a profile download and transmission session with the profile server.
- ServerChallenge: may be included in data for profile server authentication and then transmitted, and the profile server authentication data may be provided as a value signed by the profile server's secret key (SK.DPauth. SIG) used to authenticate the profile server.
- otPK.EUICC.KA: may be included in data for profile server authentication or may be included in data for profile binding and then transmitted. The same may include corresponding information and may be transmitted as data signed by the profile server (for example, included in one of dpSignature1 or dpSignature2).
- dpSignature1: may represent data signed by the profile server's secret key (SK.DPauth. SIG) corresponding to the public key included in CERT.DPauth. SIG.
- dpSignature2: may represent data signed by the profile server's secret key (SK.DPpb.SIG) corresponding to the public key included in CERT.DPpb.SIG.

The case in which the UE 520 enters the IFPP mode (step 540) may correspond to at least one of the following cases: a function for downloading a profile for IFPP is received, the UE 520 configuration at the profile provisioning timepoint has entered a state such as factory provisioning/configuration, or the same enters a menu selection for the user's profile provisioning in factory environments.

In case that the UE 520 is already configured in a state such as at-factory profile provisioning/provisioning configuration, the UE may recognize that the same already has to perform a profile download procedure in an IFPP mode prior to receiving a new function for downloading a profile for IFPP, and may instantly enter the corresponding mode. For example, when entering the LPA in a factory configuration state, the UE may automatically enter an IFPP profile configuration mode. Accordingly, entering the IFPP mode (step 540) may be configured prior to receiving a new function, for example, a function such as ESfac.prepareFactoryDownload (including BPP(including otPK.DP.KA), [CERT.DPauth.SIG], CERT.DPpb.SIG, [ServerChallenge], [otPK.EUICC.KA], [dpSignature1], or dpSignature2) received by the UE 520 in step 535. In case that [CERT.DPauth.SIG] and CERT.DPpb.SIG are included as described with reference to FIG. 4, the information received in step 535 may further include additional certificate chain information for authenticating [CERT.DPauth.SIG] and CERT.DPpb.SIG, and may be transmitted to the eUICC 525 in at least one of step 545 or step 575.

In step 535 described above, upon receiving a message requesting an IFPP profile download procedure to be performed, the UE 520 and the eUICC 525 may perform profile installation by reusing the profile installation process after UE shipping defined by legacy SGP.22.

Currently, SGP.22 requires a mutual authentication process to be performed in the profile installation process. In the mutual authentication process, the eUICC and the profile server generate random values and verify values signed by the delivered random values, thereby authenticating each other.

For example, the eUICC generates an eUICC challenge value as a random value and transmits data including the same to the profile server. The profile server signs the eUICC challenge with the profile server's secret key and then returns the same to the eUICC. The eUICC verifies the value signed by the profile server's secret key by the profile server's public key, and determines whether the eUICC challenge value included in the data transmitted by the profile server is identical to the value that the eUICC has previously generated and sent, thereby authenticating the profile server. Likewise, the profile server generates a server challenge value and transmits the same to the eUICC. The eUICC signs data including the value and returns the same. The profile server verifies the value signed by the eUICC's secret key by the eUICC's public key and determines whether the server challenge value included in the data transmitted by the eUICC is identical to the value that the profile server has previously generated and sent, thereby authenticating the eUICC.

In the process of provisioning profiles at the factory, the eUICC challenge value and the server challenge value for mutual authentication between the profile server 510 and the eUICC 525 cannot be generated and delivered in real time, and the corresponding values may thus be delivered as pre-generated information. For example, the eUICC challenge returned to the eUICC by the profile server may be a random value acquired by the profile server and pre-generated by the eUICC in the profile ordering/generating steps in FIG 2. to FIG. 3. This may be, for example, otPK.EUICC.KA value.

Meanwhile, the profile server may be unable to perform eUICC authentication as a method in which the eUICC returns the eUICC's signature data, including a server challenge, to the profile server such that the profile server verifies the data, in the process of provisioning profiles at the factory. Therefore, the eUICC 525 may authenticate the profile server 510, but the profile server 510 may not authenticate the eUICC 525 during the profile downloading process. As an example, the profile server may perform no authentication during the profile downloading process, and the profile server 510 may verify otPK.EUICC.KA signed and delivered by the eUICC in the preceding profile preparation step (for example, step 350 in FIG. 3) and may then generate a BPP, thereby authenticating the eUICC 525 in advance.

Meanwhile, in order to simulate the mutual authentication process of SGP.22, the profile server 510 may provide the factory IT 415 with data signed by the server, the data including the server challenge value transmitted to the eUICC 525 by the profile server 510 in the legacy ES10x procedure. The factory IT may transmit corresponding information to the UE such that the UE delivers the same to the eUICC. The profile server 510 may generate the server challenge upon receiving a BPP generation request or at a preceding timepoint and may then provide the same.

The LPAf (not illustrated) of the UE 520 may enter IFPP and may transmit data including an eUICC challenge as server authentication information to the eUICC 525. The data may be transmitted as data signed by the server. (step 545)

In case that step 545 has been performed, the eUICC 525 may operate based on a determination that step 545 corresponds to the timepoint to generate an RSP session. In case that the eUICC 525 determines that step 545 corresponds to the timepoint to generate an RSP session, and in case that the eUICC 525 has already been in possession of a pre-generated RSP session prior to receiving the message, the eUICC 425 may delete the pre-generated RSP session, may not delete otPK.EUICC.KA and otSK.EUICC.KA, which have not been used finally in the previous RSP session (because profile installation has not been completed), may store the same, and may then start a new RSP session.

An example of the message transmitted in step 545 may be ES10b.AuthenticateServer (Data1(Including otPK.EUICC.KA), dpSignature1, CERT.DPauth.SIG). dpSignature1 is a value obtained by signing Data1 by the secret key of the profile server 510. Upon receiving the message, the eUICC 525 may verify the profile server 510 (step 550), and otPK.EUICC.KA may be used to verify the signature of the profile server and eUICC challenge. In step 550, the verification procedure in which the eUICC 525 authenticates the profile server 510 may be performed while including one of the following procedures. Obviously, the following procedures are not limitative.
- Verifying CERT.DPauth.SIG certificate chain: the same is verified according to whether the CERT.DPauth.SIG certificate chain and the eUICC's certificate chain are in the same certificate chain
- The eUICC 525 verifies the profile server's signature: the same is verified by comparing the value obtained by decrypting dpSignature1 with a received public key of the profile server with the value of Data1(Including otPK.EUICC.KA), thereby determining whether the values are identical.
- Extracting the profile server's public key from CERT.DPauth.SIG
- Attaching otSK.EUICC.KA mapped to otPK.EUICC.KA and/or otPK.EUICC.KA to the corresponding RSP session

Upon verifying the certificate and signature of the profile server 510, the eUICC 525 may return the result to the LPAf of the UE 520. (Step 555) the eUICC 525 may return an error message to the UE 520 in case of a failure to verify the certificate and signature of the profile server 510 (step 555). Upon receiving the error message, the UE 520 may end the profile installation operation and forward the error result to the factory IT 515. (step 585)

The LPAf of the UE 520 may transmit otPK.DP.KA and BPP to the eUICC 525 after receiving a normal response message through the message returned in step 555. The LPAf of the UE 520 may split the BPP into one or more APDUs and then transmit the same to the eUICC 525. In step 575, the BPP that is included and transmitted may be encrypted by a session key and then transmitted, and otPK.DP.KA may be transmitted together with the BPP or while being included therein. An example of the message transmitted from the LPAf of the UE 520 to the eUICC 525 may be a function such as ES10b. LoadBoundProfilePackage, and the transmitted message may include data of ES8+ functions transmitted from the profile server 510. The eUICC 525 may receive a series of messages for BPP installation through step 575, and one of the received messages may include otPK.DP.KA. In case that otPK.DP.KA is included in data signed by the profile server 510 and then transmitted, the eUICC 525 may receive the public key for verifying the signed data together, or may receive the same in the previous step and use the same. As an example, CERT.DPpb.SIG including PK.DPpb.SIG may be transmitted together in step 575 described above, or may have been transmitted in step 545 described above. In this case, the eUICC 525 may attach CERT.DPpb.SIG to the RSP session generated in step 545, and may use the attached CERT.DPpb.SIG to verify the signature in step 575.

The eUICC 525 may receive otPK.DP.KA or may verify signed data (dpSignature2), which is included and received, with the pubic key included in CERT.DPpb.SIG, thereby extracting otPK.DP.KA. The eUICC 525 may combine the same with stored otSK.EUICC.KA, thereby generating a shared secret, and may make a session key for profile installation, thereby completing profile installation. The otSK.EUICC.KA to be used may be otSK.EUICC.KA attached to the RSP session, or one mapped to otPK.EUICC.KA attached to the RSP session.

The eUICC 525 may forward the profile installation result to the LPAf of the UE 520 (step 580), and the UE 520 may forward the processing result to the factory IT/OEM. (Step 585) the factory IT/OEM 515 may forward the processing result forwarded in step 585 to the profile server/server vendor 510. (Step 590) the result forwarded in step 590 may include at least one piece of information from among the used EID (or eUICC certificate including the EID), otPK.EUICC.KA, processing result, and the transaction ID previously received in step 545 or 575. In case that corresponding pieces of information are transmitted in a batch mode, the same may be delivered as a list of processing results in multiple UEs. Upon receiving the processing result in step 590, the profile server 510 may identify the BPP processing result and process used value deletion/state update. Meanwhile, although not illustrated in the drawing, the SP/SP server 505 may receive the processing result regarding profile installation through the factory IT or may receive the same via the profile server.

FIG. 6 illustrates operations of installing a profile from the factory IT to the eUICC in FIG. 2 according to an embodiment of the disclosure. FIG. 6 illustrates an embodiment of a method in which BPP-related key information is delivered from the UE to the eUICC in a batch mode in one step.

Referring to FIG. 6, if a BPP for IFPP is prepared (step 630), the factory IT 615 may acquire key information related to the corresponding BPP, which is mapped to N bundles of eUICCs, and may store the same. The factory IT 615 may transmit the BPP-related key information to the UE 620 mapped in the process of provisioning configuration values for the UE at a specific timepoint prior to shipping the UE. (Step 635) the factory IT 615 may identify the UE ID and/or EID in the process for provisioning profiles at the factory, may select encryption key information related to the mapped BPP, and may transmit the same to the UE 620, or may receive the UE's request message and transmit a message in response thereto.

Information delivered to the UE 620 in step 635 may include a BPP and, as encryption key information, at least one from among otPK.DP.KA, [otPK.EUICC.KA], [ServerChallenge], [dpSignature1], dpSignature2, [CERT.DPauth.SIG], or CERT.DPpb.SIG. otPK.DP.KA may be transmitted while being included in the BPP or as information transmitted together, or may be signed by the profile server's secret key for profile binding and then transmitted. In case that otPK.DP.KA is transmitted as signed data, the profile server may transmit the profile server's public key together in order to verify the signed data. The profile server's public key may be included in the profile server's certificate and transmitted. This may be, for example, a certificate such as CERT.DPauth.SIG, CERT.DPpb.SIG, or may be a new certificate (for example, CERT.DPifpp.SIG) regarding a public key that is symmetric to the secret key used by the profile server for IFPP. Descriptions of encryption keys that may be transmitted in step 635 are as follows:
- CERT.DPauth.SIG: a profile server certificate used to authenticate the profile server itself. The same may include PK.DPpb.SIG which is a public key necessary to verify the signature value used by the profile server to authenticate the profile server.
- CERT.DPpb.SIG: a profile server certificate. The same may include PK.DPpb.SIG which is a public key necessary to verify the signature value of the profile server used for binding between the profile and the eUICC.
- otPK.DP.KA: may be used by the eUICC to generate a shared secret value used for a profile download and transmission session with the profile server.
- ServerChallenge: may include data for profile server authentication, and the data for profile server authentication may be provided as data signed by the profile server's secret key (SK.DPauth. SIG) used to authenticate the profile server. Challenge may be pre-generated by the profile server/server vendor 610 upon receiving a BPP generation request in (step 630) or at a preceding timepoint.
- otPK.EUICC.KA: may be included in data for profile server authentication or may be included in data for profile binding and then transmitted. The same may include corresponding information and may be transmitted as data signed by the profile server (for example, included in one of dpSignature1 or dpSignature2 or dpSignature3).
- dpSignature1: may represent data signed by the profile server's secret key (SK.DPauth. SIG) corresponding to the public key included in CERT.DPauth. SIG.
- dpSignature2: may represent data signed by the profile server's secret key (SKDPpb.SIG) corresponding to the public key included in CERT.DPpb.SIG.
- dpSignature3: may represent data signed by the profile server's secret key (SK.DPifpp.SIG) corresponding to the public key included in CERT.DPifpp.SIG.

Meanwhile, although not illustrated in the drawings, the profile server 610 may sign the data transmitted in step 635 all by the profile server's secret key newly configured for IFPP, and may transmit a certificate together, which includes a public key corresponding thereto. In this case, signed data that can be decrypted by CERT.DPifpp. SIG and PK.EUICC. SIG, which is included in the certificate, instead of CERT.DPpb.SIG and CERT.DPauth.SIG, may be transmitted, and otPK.EUICC.KA may be included in the signed data and then transmitted. In other words, in step 645, data signed by CERT.DPifpp.SIG instead of CERT.DPauth. SIG and CERT.DPpb.SIG, and by SK.DPifpp.SIG instead of dpSignature 1 and diSignature 2, may be transmitted.

Meanwhile, as previously in FIG. 4 to FIG. 6, CERT.DPauth.SIG which is used for the step of authentication between the server and UE, and dpSignature 1 which is data signed by a secret key used to authenticate the profile server, may not be included when received. In case that CERT.DPauth.SIG is not included when received, CERT.DPpb.SIG may be used for profile server authentication in addition to profile binding.

The case in which the UE 620 enters the IFPP mode (step 640) may correspond to at least one of the following cases: a function for downloading a profile for IFPP is received, the UE 620 configuration at the profile provisioning timepoint has entered a state such as factory provisioning/configuration, or the same enters a menu selection for the user's profile provisioning in factory environments.

In case that the UE 620 is already configured in a state such as at-factory profile provisioning/provisioning configuration, the UE may recognize that the same already has to perform a profile download procedure in an IFPP mode prior to receiving a new function for downloading a profile for IFPP, and may instantly enter the corresponding mode. For example, when entering the LPA in a factory configuration state, the UE may automatically enter an IFPP profile configuration mode. Accordingly, entering the IFPP mode (step 640) may be configured prior to receiving a new function, for example, a function such as ESfac.prepareFactoryDownload (including BPP, otPK.DP.KA, [CERT.DPauth.SIG], CERT.DPpb.SIG, [ServerChallenge], [otPK.EUICC.KA], [dpSignature1], dpSignature2) received by the UE 620 in step 635. Meanwhile, in case that [CERT.DPauth.SIG] and CERT.DPpb.SIG have additional certificate chains as described above with reference to FIG. 4 and FIG. 5, the certificate chains may be further included and transmitted. That is, the information received in step 635 may further include additional certificate chain information and may then be transmitted to the eUICC 525 in step 645.

In the received message, otPK.EUICC.KA may be included in data signed by the profile server and transmitted.

In step 635 described above, upon receiving a message requesting an IFPP profile download procedure to be performed, the UE 620 and the eUICC 625 may define a new function for factory-installed BPP injection and may deliver BPP-related key information from the UE 620 to the eUICC 625 in a batch mode. The BPP-related key information delivered in a batch mode may be a message including at least one piece of information for installing a profile for IFPP from the factory IT 615 to the UE 620.

The UE 620 may deliver a message for delivering a factory-installed BPP to the eUICC 625 to the eUICC 625 via the LPA or without going through the LPA. That is, the UE's pertinent application or software may call the BPP delivering function and may transmit corresponding information from the UE 620 to the eUICC 625 without going through the LPA.

In case that the eUICC 625 receives a function defined to install a BPP for IFPP from the UE 620 (step 645), the eUICC 625 may enter a mode for installing a BPP for IFPP and install the profile. In strep 645, a procedure may be performed to transmit a message for installing a BPP, which is split into one or more messages. In case that the BPP and eUICC data necessary for BPP installation are transmitted through one function as in step 645, and in case that the eUICC 625 receives the function, the same may recognize that an RSP session has been generated. In case that the eUICC 625 recognizes that an RSP session has been generated, and in case that a previous RSP session exists, the corresponding session may be canceled, otPK.EUICC.KA and otSK.EUICC.KA which are not used in the corresponding session may be stored, and starting of a new RSP session may be recognized, thereby performing operations.

The eUICC 525 may perform one of the following verification procedures. (step 650)
- Verifying CERT.DPauth.SIG certificate chain: the same is verified according to whether the CERT.DPauth.SIG certificate chain and the eUICC's certificate chain are in the same certificate chain
- Verifying CERT.DPauth.SIG: verifying the validity of the profile server's certificate used to authenticate the profile server
- Verifying the profile server's signature value with PK.Dpauth.SIG: PK.DPpb.SIG extracted from CERT.Dpauth.SIG is used to decrypt data signed with SK.DPpb.SIG and delivered by the profile server, thereby verifying the signature
- Verifying CERT.DPpb. SIG certificate chain: the same is verified according to whether the CERT.DPpb.SIG certificate chain and the eUICC's certificate chain are in the same certificate chain
- Verifying CERT.DPpb.SIG: verifying the validity of the profile server's certificate used for profile binding
- Verifying the profile server's signature value with PK.DPpb.SIG: PK.DPpb.SIG extracted from CERT.DPpb. SIG is used to decrypt data signed with SK.DPpb.SIG and delivered by the profile server, thereby verifying the signature
- Verifying otPK.EUICC.KA: the message received by the eUICC 625 in step 645 may or may not include otPK.EUICC.KA. In addition, otPK.EUICC.KA may be transmitted while being included or without being included in data signed by the profile server. In case that otPK.EUICC.KA is included and received, the eUICC 625 may determine whether the same has otSK.EUICC.KA corresponding to otPK.EUICC.KA.

Meanwhile, received data including otPK.EUICC.KA may be signed by one of secret keys (SK.DPxx.SIG, xx indicates usage) used by the profile server and transmitted. This may be, for example, a secret key (SK.DPauth.SIG) used for profile binding or a secret key (SK.DPauth.SIG) used to authenticate the profile server. In case that data including otPK.EUICC.KA is signed by the profile server's secret key and received, the eUICC 625 may receive a public key for signature verification or a profile server certificate including the public key together with the message received from the UE 620 in step 645. The eUICC 625 may perform one of the following procedures according to whether otPK.EUICC.KA is received and received as signed data. Obviously, the following procedures are not limitative.
a. In case that otPK.EUICC.KA is included and received as signed data,
   i. The eUICC 625 verifies the profile server's signature, including otPK.EUICC.KA stored therein. In case that eUICC 625 fails to verify the profile's signature, the same may return an error to the UE and end the procedure.
   ii. The eUICC 625 may also perform additional verification by using otPK.EUICC.KA for eUICCChallenge for authenticating the profile server in addition to a-i. As described above with reference to FIG. 4 to FIG. 5, otPK.EUICC.KA received as data signed by the profile server may be used as an eUICC Challenge to identify whether the same is identical to otPK.EUICC.KA previously generated and stored by the eUICC. In case that the same is different from the stored value, an error may be returned to the UE to end the procedure.
b. In case that otPK.EUICC.KA is included, and received as un-signed data,
   i. The eUICC 625 may not verify the signature of the profile server that has signed otPK.EUICC.KA.
c. In case that otPK.EUICC.KA is not included: the eUICC 625 may not verify the signature of the profile server that has signed otPK.EUICC.KA or, in case that otPK.EUICC.KA is not included when received, but the corresponding value needs to be used to verify the signature (that is, in case that the profile server has calculated the signature while including the corresponding value) as described above with reference to FIG. 4, the stored otPK.EUICC.KA may be used to verify the signature.

- Generating a session key: the eUICC 625 may generate a session key with stored otSK.EUICC.KA and received otPK.DP.KA. otPK.DP.KA may be included in data signed by SK.DPpb.SIG and then received. The otPK.EUICC.KA to be used by the eUICC 625 may be deemed to be otSK.EUICC.KA corresponding to otPK.EUICC.KA included when the profile server calculates the signature, or to be otSK.EUICC.KA corresponding to received otPK.EUICC.KA.
- Decryption and BPP installation; the eUICC 625 which has the previously generated session key may decrypt and install the profile. In case that decryption by the generated session key is impossible, the eUICC 625 cannot install the profile, and may thus return a corresponding error and end the installation procedure.

Meanwhile, in the process in which the eUICC 625 performs a procedure for profile installation, the same may fail to perform the real-time mutual authentication process currently defined by SGP.22. That is, the profile server may be unable to perform eUICC authentication as a method in which the eUICC returns signature data of the eUICC 625, including a server challenge, to the profile server such that the profile server verifies the data, in the process of provisioning profiles at the factory. Therefore, the eUICC 625 may receive a message (step 645) including no server challenge. Therefore, as described above in step 350 in FIG. 3, the profile server 615 may verify otPK.EUICC.KA signed and delivered by the eUICC 625 in the previous profile preparing step 630, and may then generate a BPP, thereby authenticating the eUICC 625 in advance. In addition, the eUICC 625 may conduct processing without server authentication. In this case, data signed by CERT.DPauth.SIG and SK.DPauth.SIG may not be included when received, in step 635, as mentioned above.

In case that the eUICC 625 is configured to perform profile server authentication in IFPP and has failed to receive data signed by CERT.DPauth.SIG and SK.DPauth. SIG mentioned above for profile server authentication in (step 650), the eUICC 625 may return an error and end the procedure.

In case that the eUICC 625 uses a new certificate for IFPP, such as CERT.DPifpp.SIG, instead of CERT.DPauth.SIG or CERT.DPpb.SIG or instead of the two in IFPP, as described above, and receives data signed by SK.DPifpp.SIG corresponding thereto, the eUICC 625 may verify the signature with the certificate. If signature verification fails, the eUICC 625 may return an error. If signature verification succeeds, the eUICC 625 may subsequently perform a profile installation procedure.

As step 480 in FIG. 4 or step 580 in FIG. 5 above, the eUICC 625 may forward the profile installation result to the UE 620 (step 655), and the UE 620 may forward the processing result to the factory IT 615. (Step 660) the factory IT/OEM 615 may forward the forwarded result to the profile server/server vendor 610. (Step 670) the result forwarded in step 670 may include at least one piece of information from among the used EID (or eUICC certificate including the EID), otPK.EUICC.KA, processing result, and the transaction ID previously received in step 645. In case that corresponding pieces of information are transmitted in a batch mode, the same may be delivered as a list of processing results in multiple UEs. The profile server 610, upon receiving the same, may identify the BPP processing result and process used value deletion/state update. Meanwhile, although not illustrated in the drawing, the SP/SP vendor 605 may receive the processing result regarding profile installation through the factory IT/OEM 620 or may receive the same via the profile server/server vendor 610.

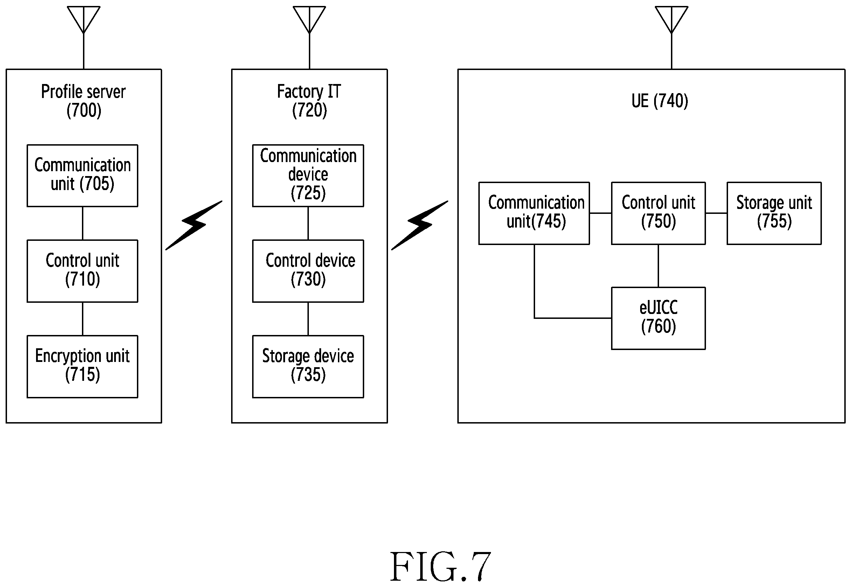

FIG. 7 is a block diagram illustrating the structure of a profile server 700, a factory IT 720, and a UE 740 in a wireless communication system according to an embodiment of the disclosure.

Referring to FIG. 7, the profile server 700 according to an embodiment of the disclosure may include a communication unit 705, a control unit 710, and an encryption unit 715.

The communication unit 705 may transmit data to other devices or receive data from other devices. The communication unit 705 may transmit or receive encrypted keys, encrypted profiles, and the like. To this end, the communication unit 705 may include at least one communication module and antenna and the like.

The control unit 710 may control respective components of the profile server 700 for profile installation according to the disclosure. Detailed operations of the control unit 710 have been described above. According to an embodiment, the profile server 700 may refer to information received from a service provider server or a manufacturer server or from the service operator and the manufacturer, thereby determining whether orders are identical. With regard to the same order, the profile server 700 may map a profile and eUICC providing information and store the same in a storage unit (not illustrated). In addition, the profile server 700 may refer to EID information received from the service provider and control operations such that the profile is mapped to a specific EID and prepared in advance. According to another embodiment, the control unit 710 may determine whether or not to prepare a profile for IFPP with information received from a message received through the communication unit 705, and may enter and perform a profile preparing operation. The profile server 700 may receive a message from the factory IT through the communication unit 705, may confirm a request for downloading a profile for IFPP from the received message, may process operations such that a profile is prepared for factory usage, and may transmit the processing result to the factory IT through the communication unit 705. The encryption unit 715 encrypts or decrypts keys or profiles under the control of the control unit 710.

The encryption unit 715 may include an HSM or may be referred to as an HSM itself, and may encrypt and decrypt a profile without exposing the encryption key. Depending on the implementation, the encryption unit 715 may be embedded in the control unit 710 or implemented as a software code driven by the control unit 710.

Referring to FIG. 7, the factory IT 720 according to an embodiment of the disclosure may include a communication device 725, a control device 730, and a storage device 735. The communication device 725 may transmit data to other devices or receive data from other devices. In case that the factory IT 720 operates as one device including the storage device 735, the factory IT 720 may include a separate control device 730 for centrally controlling the communication device 725 and the storage device 735, and the storage device 735. The factory IT 720 may be configured as one or more devices as described above.

The communication device 725 may transmit or receive encrypted keys, encrypted profiles, and the like. To this end, the communication device 725 may include at least one communication module and antenna and the like. According to an embodiment of the disclosure, in case the factory IT 720 operates as one device including the storage device 735, the communication device 725 may be provided for an independent network connection inside the factory IT/OEM, not a connection to the manufacturer's external server. The factory IT 720 may transmit or receive encrypted key information and encrypted profiles and the like through the communication device 725. The control device 730 of the factory IT 720 may determine mapping of a received profile or encrypted key or the like with the UE mapped to corresponding information and may transmit the same to the UE 740 through the communication device 725.

Meanwhile, factory IT/manufacturer devices which transmit encrypted key information and encrypted profiles and the like to the profile server or returns profile installation results may be identical or different devices. For example, a factory IT device that has received a profile from a profile server/server vendor and another factory IT device that transmits the profile to the UE may be identical or different devices. The factory IT device that transmits the profile to the UE may or may not have a connection to an external server. Therefore, an installation result may be delivered from the device that has received the same from the UE to another device in the factory IT/manufacturer, and may be delivered from the factory IT device having an external connection to the profile server/server vendor.

The storage device 735 of the factory IT 720 may store at least one encrypted profile. In addition, the factory IT 720 may store encrypted key information regarding at least one encrypted profile. If the communication device 725 of the factory IT 720 receives a profile installation result, the control device 730 may determine the same, may update mapped profile's installation result information, may update the result information in the storage device 735, and may provide the same to the profile server 700 in a batch mode at a specific timepoint. The storage device 735 may include at least one type of storage medium from among a hard disk type, a random Access Memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The factory IT 720 may be implemented in a sever type or the like.

Referring to FIG. 7, the UE 740 may include a communication unit 745, a control unit 750, a storage unit 755, and an eUICC 760. The communication unit 745 may transmit data to other devices or receive data from other devices. The communication unit 745 may receive encrypted keys, encrypted profiles, and the like. To this end, the communication unit 745 may include at least one communication module and antenna and the like. The control unit 750 may control respective components of the UE 740 for profile installation according to the disclosure. The control unit 750 may control overall operations of the UE 740. For example, the control unit 750 may transmit/receive signals through the communication unit 745. In addition, the control unit 750 may record and read data in the storage unit 755. There may be at least one control unit 750. For example, the control unit 750 may include a communication processor (CP) that performs control for communication, and an application processor (AP) that controls upper layers such as application programs. According to an embodiment, in case that the storage unit 755 has UE-stored configuration information, the control unit 750 may request the storage unit 755 to provide the information such that a screen display unit (not illustrated) displays the same, or may receive the information and process additional operations. According to another embodiment, the control unit 750 may match a data record that has been rad through the storage unit 755, or information collected through the control unit 750 and the communication unit 745 such that the UE infers information that may be referenced to select profile installation at the factory. In addition, the control unit 750 may determine whether a user consent is necessary regarding specific information stored in the UE 740, and may display the same on the screen display unit (not illustrated).

The control unit 750 may control the UE 740 so as to perform an operation corresponding thereto. According to an embodiment, the control unit 750 may include an LPA that handles driving and control of the eUICC 760, an application having an integrally implemented LPA, and an application that manages factory installation. In addition, the control unit 750 may include a UE framework which interprets information received by the LPA or application, request the communication processor (CP) to provide a specific command PDU, or collects all or part of requested information from the storage unit 755, and returns the same to the LPA or application.

The control unit 755 may aggregate specific information acquired from the eUICC 760 through the UE 740 and the communication unit 745 and may determine an IFPP mode entering operation such that the eUICC 760 enters IFPP. The eUICC 760 may operate under the control of the control unit 750. According to an embodiment of the disclosure, the eUICC 760 may enter the IFPP mode, process the procedure regarding profile installation, and return the processing result to the UE 740. The control unit 750 according to an embodiment of the disclosure may receive a response message or profile information of a profile package received from the factory IT 720, may determine whether there is IFPP profile installation request information from the received response message or profile information, may determine whether or not to perform profile installation in a factory mode with reference to the input information or UE configuration at the time of reception, may determine whether to enter a normal mode or an IFPP mode, may determine to enter the IFPP mode, may compose a message to be delivered to the eUICC 760 for IFPP profile installation, may compose the profile package's profile information as one or more messages, may control the message to be delivered to the eUICC 760, may receive a processing result received from the eUICC 760 to the UE 740 and determine whether or not to end the profile installation procedure, may deliver the processing result to the communication unit 745, and may control the UE 740 such that the communication unit 745 delivers the processing result to the factory IT 720.

The storage unit 755 may store data such as basic programs for operations of the UE 740, application programs, and configuration information. According to an embodiment of the disclosure, the storage unit 755 may include at least one storage medium from among a flash memory type, a hard disk type, a multimedia card micro type, a card-type memory (for example, SD or XD memory), a magnetic memory, a magnetic disk, an optical disk, a random Access Memory (RAM), a static random access memory (SRAM), a read-only memory (ROM), a programmable read-only memory (PROM), and an electrically erasable programmable read-only memory (EEPROM). The storage unit 755 may be integrated with the control unit 750 and thus implemented as a system on chip (SoC). The control unit 750 may perform various operations by using various programs, content, data, and the like stored in the storage unit.

In FIG. 7, the eUICC 760 is a UICC chip embedded in the UE 740, and may perform functions of storing, managing, and deleting at least one profile. Profiles may refer data information, as a whole, such as one or multiple applications stored in a legacy UICC card, subscriber authentication information, and telephone directories. The eUICC 760 may be included as a part of the UE 740 as illustrated in FIG. 1. In FIG. 2 to FIG. 6, in order to describe operations between the UE 740 and the eUICC 760, there are expressed as separate modules. The eUICC 760 may include a control unit for installing profiles, a storage unit, and a communication unit. A part of an application in the eUICC 760 may be installed in the control unit 750, and the installed application may include a part of the LPA's function.

According to an embodiment of the disclosure, the control unit of the eUICC 760 may acquire profile installation request information of the UE 720 received through the communication unit, may acquire predetermined information regarding encryption key information and a profile package through corresponding message information, may determine an operation according to whether the eUICC 760 is to enter IFPP, may accordingly compare/verify/process the IFPP profile installation procedure and received information with information stored in the storage unit of the eUICC 760, may verify the received profile package, may perform an installation-related operation, may compose a message, and may return the processing result to the UE 740 through the communication unit.

Components mentioned in FIG. 7 are not limited to the above-described examples. For example, the factory ITG 720 may include a larger or smaller number of components than the above-described components. The UE 740 according to various embodiments disclosed herein may be an electronic device in various shapes. The electronic device may include, for example, a portable communication device (for example, smartphone), a computer device, a portable multimedia device, a portable medical device, a camera, a wearable device, or a home appliance. The electronic device according to an embodiment of the disclosure is not limited to the above-described devices.

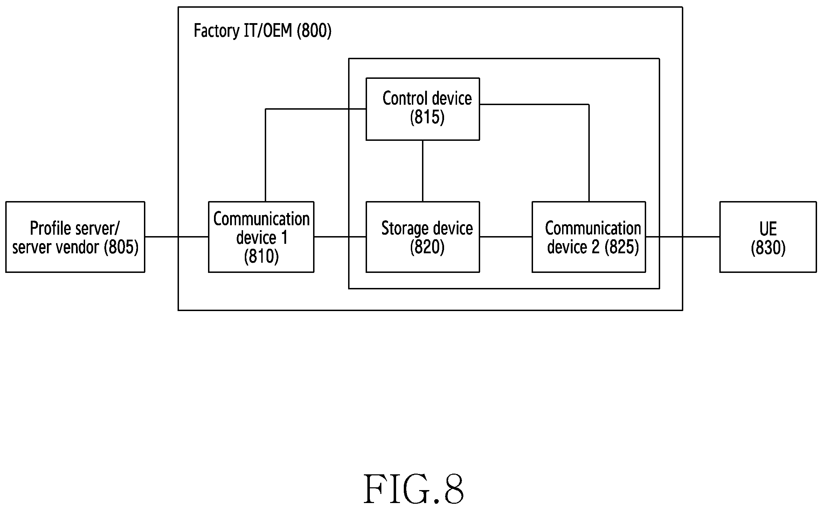

FIG. 8 is a block diagram illustrating the structure of a factory IT in a wireless communication system according to an embodiment of the disclosure. Specifically, FIG. 8 illustrates an example of the configuration of the factory IT 720 in FIG. 7.

Referring to FIG. 8, the factory IT 800 may include a central control device 815, communication device 1 810, a storage device 820, and communication device 2 825. The storage device 820 may be a server that stores eUICC data (information such as encryption keys and certificates) for profile installation at a specific factory, or profiles to be installed. Communication device 2 825 may include a storage device and may be a device (for example, PC) located at a contact point of a UE 830 into which a profile is to be injected. Communication device 2 825 may receive and store profiles of installation target UEs from the storage device 820, may connect to the UE 830 in a wired/wireless manner to transmit a series of commands for profile injection, and may receive the command processing result from the UE 830. Devices involved to install profiles at a factory inside the OEM, for example, the storage device 820 and communication device 2 825, may be connected only by an indoor network, and may not support outdoor communication connection. In case that outdoor communication connection is not supported, communication device 1 810 may have a contact point of external connection and may request the profile server/server vendor 865 to provide a BPP or receive a BPP as a result of request. Alternatively, in case that outdoor communication connection is not supported, communication device 1 810 may transmit the profile installation result to the profile server/server vendor 805. Communication device 1 810 that provides a connection to an external device may provide no direct connection to the storage device 820 or communication device 2 825 including a storage device. Accordingly, the storage device 820 which receives the result of installing a profile in the UE 830 from communication device 2 825 and stores the same may be different from communication device 1 810 which delivers installation results to the profile server/server vendor 805 in real time or delivers a batch of installation results thereto at a specific timepoint.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., a program) including one or more instructions that are stored in a storage medium (e.g., an internal memory or external memory) that is readable by a machine (e.g., an electronic device). For example, a processor of the machine (e.g., the electronic device) may invoke at least one of the one or more stored instructions from the storage medium, and execute it, with or without using one or more other components under the control of the processor. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal comprising an embed universal integrated circuit card (eUICC) in a wireless communication system, the method comprising:
receiving, from a factory IT server, a first message comprising a bound profile package (BPP) for installing a profile and encryption key information related to the BPP;
starting a profile configuration mode, based on the first message;
transmitting, to the eUICC, a second message comprising the BPP; and
receiving, from the eUICC, a third message comprising installation result of the profile.

2. The method of claim 1, wherein the transmitting the second message comprises:
transmitting, to the eUICC, a fourth message comprising profile installation preparation information for installing the profile;
receiving, from the eUICC, a fifth message comprising a verification result based on the profile installation preparation information, in response to the fourth message; and
splitting the BPP and transmitting, to the eUICC, the BPP based on the fifth message, and
wherein the BPP is protected by the session key.

3. The method of claim 1, wherein the encryption key information comprises a one-time public key configured to specify installation of the profile.

4. The method of claim 1, wherein the BPP indicates an encrypted profile package to be installed in a specific eUICC, and
wherein the BPP is encrypted using an encryption parameter, which is decrypted by the specific eUICC, by a profile server.

5. The method of claim 3, wherein the profile installation preparation information comprises at least one of profile data comprising the one-time public key and a signature value of profile data signed by a secret key of a profile server.

6. The method of claim 5, wherein the verification result comprises a result of identifying a one-time secret key corresponding to the one-time public key of the profile data by the eUICC, or identifying the signature value of the profile data by the eUICC.

7. The method of claim 1, wherein the profile configuration mode is started in case that a function call for profile installation is received, the profile configuration mode is preconfigured, or the terminal receives a user input.

8. The method of claim 1, further comprising:
transmitting, to the factory IT server, the third message received from the eUICC.

9. A terminal comprising an embed universal integrated circuit card (eUICC) in a wireless communication system, the terminal comprising:
a transceiver; and
a controller coupled to the transceiver,
wherein the controller is configured to:
receive, from a factory IT server, a first message comprising a bound profile package (BPP) for installing a profile and encryption key information related to the BPP;
start a profile configuration mode, based on the first message;
transmit, to the eUICC, a second message comprising the BPP; and
receive, from the eUICC, a third message comprising installation result of the profiled.

10. The terminal of claim 9, wherein controller is configured to:
transmit, to the eUICC, a fourth message comprising profile installation preparation information for installing the profile;
receive, from the eUICC, a fifth message comprising a verification result based on the profile installation preparation information, in response to the fourth message; and
split the BPP and transmit to the eUICC, the BPP to the eUICC, based on the fifth message, and
wherein the BPP is protected by the session key.

11. The terminal of claim 9, wherein the encryption key information comprises a one-time public key configured to specify installation of the profile.

12. The terminal of claim 9, wherein the BPP indicates an encrypted profile package to be installed in a specific eUICC, and wherein the BPP is encrypted using an encryption parameter, which is decrypted by the specific eUICC, by a profile server.

13. The terminal of claim 11, wherein the profile installation preparation information comprises at least one of profile data comprising the one-time public key and a signature value of profile data signed by a secret key of a profile server.

14. The terminal of claim 13, wherein the verification result comprises a result of identifying a one-time secret key corresponding to the one-time public key of the profile data by the eUICC, or identifying the signature value of the profile data by the eUICC.

15. The terminal of claim 9, wherein the profile configuration mode is started in case that a function call for profile installation is received, the profile configuration mode is preconfigured, or the terminal receives a user input.
